# EUROPÄISCHE PATENTSCHRIFT

(11) **EP 4 000 782 B1**
(45) Veröffentlichungstag und Bekanntmachung des Hinweises auf die Patenterteilung: **19.07.2023**
(21) Anmeldenummer: 21207490.0
(22) Anmeldetag: 10.11.2021
(51) Int. Cl.: B23K 1/005, B23K 31/02, B23K 1/008, F27B 5/04, B23K 101/20

(54) **VERFAHREN ZUM BETRIEB EINER VAKUUMLÖTANLAGE SOWIE VAKUUMLÖTANLAGE**
METHOD FOR OPERATION OF A VACUUM SOLDERING SYSTEM AND VACUUM SOLDERING SYSTEM
PROCÉDÉ POUR L'OPÉRATION D'UN SYSTÈME DE SOUDAGE SOUS VIDE ET SYSTÈME DE SOUDAGE SOUS VIDE

(30) Priorität: 11.11.2020 DE 102020129759
(43) Veröffentlichungstag der Anmeldung: 25.05.2022
(73) Patentinhaber: Schweikhart, Martin, 2345 Brunn am Gebirge (AT)
(72) Erfinder: Schweikhart, Martin, 2345 Brunn am Gebirge (AT)
(74) Vertreter: Daub, Thomas

(56) Entgegenhaltungen:
- EP-A1- 2 995 894
- US-A1- 2021 265 301

## Beschreibung

### Stand der Technik

Die Erfindung betrifft ein Verfahren zu einem Betrieb einer Vakuumlötanlage nach dem Oberbegriff des Anspruchs 1 sowie eine Vakuumlötanlage nach dem Oberbegriff des Anspruchs 6.

Es sind bereits Verfahren zu einem Betrieb einer Vakuumanlage vorgeschlagen worden, wobei in zumindest einem Verfahrensschritt in zumindest eine Vakuumkammer der Vakuumanlage mittels zumindest einer Heizeinheit der Vakuumanlage Wärme für einen Werkstückbehandlungsprozess, insbesondere Lötprozess, eingebracht wird, derart, dass in der Vakuumkammer, insbesondere betrachtet entlang einer Vertikalachse, eine einzelne Wärmebehandlungszone, insbesondere Lötzone, bereitgestellt wird, die eine zumindest im Wesentlichen homogene Temperaturverteilung aufweist. Zudem sind auch bereits Vakuumanlagen mit zumindest einer Vakuumkammer, mit zumindest einer an der Vakuumkammer angeordneten Heizeinheit und mit zumindest einer Steuer- oder Regeleinheit zu einem Durchführen der oben genannten Verfahren bekannt. Insbesondere aus EP 2 995 894 A1, EP 1 472 038 B1, DE 11 2018 006 652 T5 und US 2004/0211817 A1 sind bereits Verfahren zu einem Betrieb einer Vakuumanlage und Vakuumanlagen, die entsprechend den in den Druckschriften offenbarten Verfahren betrieben werden, bekannt.

Die Aufgabe der Erfindung besteht insbesondere darin, ein gattungsgemäßes Verfahren und/oder eine gattungsgemäße Vakuumlötanlage mit verbesserten Eigenschaften hinsichtlich einer Flexibilität eines Werkstückbehandlungsprozesses, insbesondere Lötprozesses, insbesondere hinsichtlich einer Einsatzmöglichkeit von unterschiedlichen Loten, die in einem Lötvorgang zeitgleich verarbeitet werden können, bereitzustellen. Die Aufgabe wird erfindungsgemäß durch die Merkmale des Anspruchs 1 und/oder des Anspruchs 6 gelöst, während vorteilhafte Ausgestaltungen und Weiterbildungen der Erfindung den Unteransprüchen entnommen werden können.

### Vorteile der Erfindung

Die Erfindung geht aus von einem Verfahren zu einem Betrieb einer Vakuumlötanlage, wobei in zumindest einem Verfahrensschritt in zumindest eine Vakuumkammer der Vakuumlötanlage mittels zumindest einer, insbesondere an der Vakuumkammer angeordneten und vertikal oder horizontal ausgerichteten, Heizeinheit, insbesondere Infrarotheizeinheit, der Vakuumlötanlage Wärme, insbesondere mittels Wärmestrahlung, für einen Lötprozess eingebracht wird, wobei die Heizeinheit zumindest eine Vielzahl an Infrarotstrahlern aufweist, die an der Vakuumkammer angeordnet ist.

Es wird vorgeschlagen, dass die Heizeinheit die Vakuumkammer in zumindest einem Betriebszustand um mehr als 90° umgibt, wobei innerhalb der Vakuumkammer, insbesondere entlang einer zumindest im Wesentlichen parallel zu einer Längsachse, insbesondere Vertikalachse, der Heizeinheit verlaufenden Richtung, zumindest zwei, insbesondere zumindest drei, als Lötzonen ausgebildete Wärmebehandlungszonen mit unterschiedlichen Löttemperaturen bereitgestellt werden, insbesondere zu einer Verarbeitung von unterschiedlichen Loten mit verschiedenen Schmelztemperaturen in einem einzelnen Lötprozess, wobei entlang einer maximalen Gesamterstreckung der Vakuumkammer, insbesondere entlang der zumindest im Wesentlichen parallel zur Längsachse der, insbesondere als Infrarotheizeinheit ausgebildeten, Heizeinheit verlaufenden Richtung, innerhalb der Vakuumkammer eine inhomogene Temperaturverteilung erzeugt wird. Es ist jedoch auch denkbar, dass eine von zwei, insbesondere von drei, abweichende Anzahl an Wärmebehandlungszonen, insbesondere Lötzonen, innerhalb der Vakuumkammer bereitgestellt werden, wie beispielsweise zumindest vier, zumindest fünf, zumindest sechs Wärmebehandlungszonen, insbesondere Lötzonen, innerhalb der Vakuumkammer o. dgl. Unter "im Wesentlichen parallel" soll hier insbesondere eine Ausrichtung einer Richtung relativ zu einer Bezugsrichtung, insbesondere in einer Projektionsebene, verstanden werden, wobei die Richtung gegenüber der Bezugsrichtung eine Abweichung insbesondere kleiner als 8°, vorteilhaft kleiner als 5° und besonders vorteilhaft kleiner als 2° aufweist. Insbesondere werden die Wärmebehandlungszonen, insbesondere Lötzonen, mit unterschiedlichen Temperaturen, insbesondere Löttemperaturen, innerhalb der Vakuumkammer zeitgleich bereitgestellt. Es ist jedoch auch denkbar, dass die Wärmebehandlungszonen, insbesondere Lötzonen, mit unterschiedlichen Temperaturen, insbesondere Löttemperaturen, innerhalb der Vakuumkammer, insbesondere gezielt, zeitlich versetzt bereitgestellt werden, insbesondere derart, dass zuerst eine Wärmebehandlungszone, insbesondere Lötzone, mit einer ersten Temperatur, insbesondere Löttemperatur, bereitgestellt wird und nach einer Zeitspanne zumindest eine weitere Wärmebehandlungszone, insbesondere Lötzone, mit einer weiteren Temperatur, insbesondere Löttemperatur, bereitgestellt wird. Bevorzugt werden die Wärmebehandlungszonen, insbesondere Lötzonen, mit unterschiedlichen Temperaturen, insbesondere Löttemperaturen, innerhalb der Vakuumkammer über einen zumindest weitestgehend gemeinsamen Zeitraum bereitgestellt. Die Wärmebehandlungszonen, insbesondere Lötzonen, werden vorzugsweise während einer Durchführung eines einzelnen Wärmebehandlungsprozesses, insbesondere Lötprozesses, von in der Vakuumkammer angeordneten Werkstücken, insbesondere Hartmetall-, Keramik- und/oder Diamantwerkzeugen, innerhalb der Vakuumkammer bereitgestellt. Vorzugsweise werden während eines, insbesondere einzelnen, Wärmebehandlungsprozesses, insbesondere Lötprozesses, innerhalb der Vakuumkammer zeitgleich unterschiedliche Temperaturen, insbesondere Löttemperaturen, bereitgestellt. Insbesondere werden die Wärmebehandlungszonen, insbesondere Lötzonen, mit unterschiedlichen Temperaturen, insbesondere Löttemperaturen, nach einem Schließen der Vakuumkammer innerhalb der Vakuumkammer während eines Durchführens eines, insbesondere einzelnen, Wärmebehandlungsprozesses, insbesondere Lötprozesses, bereitgestellt. Bevorzugt weisen die Temperaturen, insbesondere Löttemperaturen, der, insbesondere zeitgleich in der Vakuumkammer bereitgestellten, einzelnen Wärmebehandlungszonen, insbesondere Lötzonen, einen Temperaturunterschied, insbesondere Löttemperaturunterschied, auf, der größer ist als 5 K. Vorzugsweise werden in den Wärmebehandlungszonen, insbesondere Lötzonen, unterschiedliche Temperaturen, insbesondere Löttemperaturen, durch eine gerichtete Wärmestrahlung, die von der Heizeinheit ausgestrahlt wird, bereitgestellt. Die unterschiedlichen Temperaturen, insbesondere Löttemperaturen, in den Wärmebehandlungszonen, insbesondere Lötzonen, werden bevorzugt infolge einer, insbesondere zonenweisen, individuellen Steuerung oder Regelung der Heizeinheit bereitgestellt. Es ist jedoch auch denkbar, dass unterschiedliche Temperaturen, insbesondere Löttemperaturen, der Wärmebehandlungszonen, insbesondere Lötzonen, infolge einer einheitlichen Steuerung oder Regelung der Heizeinheit in Kombination mit einer aktiven zonenweisen Kühlung der Wärmebehandlungszonen, insbesondere Lötzonen, zu einer Temperaturregelung oder infolge einer anderen, einem Fachmann als sinnvoll erscheinenden Vorgehensweise bereitgestellt werden.

Das Verfahren ist vorzugsweise zu einem Betrieb einer Werkzeugvakuumlötanlage zu einem Löten von Hartmetall-, Keramik- und Diamantwerkzeugen vorgesehen. Es ist jedoch auch denkbar, dass das Verfahren zu einem Betrieb einer anders gearteten Vakuumanlage vorgesehen ist, wie beispielsweise einer Vakuumanlage zu einem Vakuumglühen von Werkstücken, einer Vakuumanlage zu einem Reinigen oder einem Sterilisieren von Bauteilen o. dgl. Unter "vorgesehen" soll insbesondere speziell programmiert, speziell eingerichtet, speziell ausgelegt und/oder speziell ausgestattet verstanden werden. Darunter, dass ein Objekt zu einer bestimmten Funktion vorgesehen ist, soll insbesondere verstanden werden, dass das Objekt diese bestimmte Funktion in zumindest einem Anwendungs- und/oder Betriebszustand erfüllt und/oder ausführt.

Mittels der erfindungsgemäßen Ausgestaltung des Verfahrens kann vorteilhaft eine hohe Flexibilität eines Wärmebehandlungsprozesses, insbesondere eines Lötprozesses, ermöglicht werden. Es kann vorteilhaft eine Wärmebehandlung von mehreren Bauteilen mit unterschiedlichen Temperaturen in einem einzelnen Wärmebehandlungsprozess, insbesondere in einer einzelnen Vakuumkammer, ermöglicht werden. Es können, insbesondere bei einer Verwendung des Verfahrens in einer Vakuumlötanlage, vorteilhaft unterschiedliche Lote mit verschiedenen Schmelztemperaturen zeitgleich oder zeitlich hintereinander in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden. Es kann vorteilhaft ein hoher Durchsatz mittels des Verfahrens ermöglicht werden.

Des Weiteren wird vorgeschlagen, dass die Heizeinheit mittels einer Steuer- oder Regeleinheit der Vakuumanlage derart gesteuert oder geregelt wird, dass innerhalb der Vakuumkammer, insbesondere entlang der zumindest im Wesentlichen parallel zur Längsachse der Heizeinheit verlaufenden Richtung, in den Wärmebehandlungszonen, insbesondere Lötzonen, unterschiedliche Temperaturen, insbesondere Löttemperaturen, erzeugt werden. Die Heizeinheit ist bevorzugt als Wärmestrahlungsheizeinheit, insbesondere als Infrarotheizeinheit, ausgebildet. Bevorzugt weist die Heizeinheit zumindest einen Infrarotstrahler, insbesondere eine Vielzahl an Infrarotstrahlern, auf, der/die an der Vakuumkammer angeordnet ist/sind. Vorzugsweise weist die Heizeinheit je Wärmebehandlungszone, insbesondere Lötzone, zumindest ein Heizelement auf, das der entsprechenden Wärmebehandlungszone, insbesondere Lötzone, zugeordnet ist. Bevorzugt weist die Heizeinheit je Wärmebehandlungszone, insbesondere Lötzone, zumindest drei, insbesondere zumindest sechs, Heizelemente auf, die der entsprechenden Wärmebehandlungszone, insbesondere Lötzone, zugeordnet sind. Es ist jedoch auch denkbar, dass die Heizeinheit eine von drei, insbesondere von sechs, abweichende Anzahl an Heizelementen je Wärmebehandlungszone, insbesondere Lötzone, aufweist, wie beispielsweise zumindest zwei, zumindest vier, zumindest acht Heizelemente je Wärmebehandlungszone, insbesondere Lötzone, o. dgl. Bevorzugt sind die einer Wärmebehandlungszone, insbesondere Lötzone, zugeordneten Heizelemente zu einem Großteil in einem Bereich der Heizeinheit angeordnet, der entlang der zumindest im Wesentlichen parallel zur Längsachse, insbesondere Vertikalachse, der Heizeinheit verlaufenden Richtung versetzt zu einem weiteren Bereich der Heizeinheit angeordnet ist, in dem die zumindest einer weiteren Wärmebehandlungszone, insbesondere Lötzone, zugeordneten Heizelemente zu einem Großteil angeordnet sind. Unter "einem Großteil" sollen insbesondere zumindest mehr als 60 %, bevorzugt zumindest mehr als 80 % und besonders bevorzugt zumindest mehr als 90 % einer Gesamterstreckung oder eines Gesamtvolumens eines Bauteils oder einer Einheit verstanden werden. Bevorzugt sind die einer Wärmebehandlungszone, insbesondere Lötzone, zugeordneten Heizelemente zu einem Großteil in einem eine Art Hohlkreiszylinder beschreibenden Bereich der Heizeinheit, der die Vakuumkammer umgibt, angeordnet, wobei die zumindest einer weiteren Wärmebehandlungszone, insbesondere Lötzone, zugeordneten Heizelemente in einem weiteren eine Art Hohlkreiszylinder beschreibenden Bereich der Heizeinheit, der die Vakuumkammer umgibt, angeordnet sind. Der eine Art Hohlkreiszylinder beschreibende Bereich der Heizeinheit und der weitere eine Art Hohlkreiszylinder beschreibende Bereich der Heizeinheit können entlang der zumindest im Wesentlichen parallel zur Längsachse, insbesondere Vertikalachse, der Heizeinheit verlaufenden Richtung direkt aneinander angrenzend oder voneinander beabstandet, insbesondere unter Zwischenschaltung von zumindest einem zusätzlichen Bereich mit Heizelementen, angeordnet sein. Die Heizeinheit umfasst in Abhängigkeit von einer Anzahl bereitzustellender Wärmebehandlungszonen, insbesondere Lötzonen, eine entsprechende Anzahl an Bereichen, insbesondere eine Art Hohlkreiszylinder beschreibende Bereiche, in denen Heizelemente zu einem Erzeugen der unterschiedlichen Temperaturen, insbesondere Löttemperaturen, in den Wärmebehandlungszonen, insbesondere Lötzonen, angeordnet sind. Die Heizelemente sind mittels der Steuer- oder Regeleinheit vorzugsweise individuell steuerbar oder regelbar, insbesondere unabhängig voneinander. Alternativ oder zusätzlich ist es denkbar, dass die Heizelemente mittels der Steuer- oder Regeleinheit zonenweise zusammen steuerbar oder regelbar sind. Die Heizeinheit umgibt die Vakuumkammer in zumindest einem Betriebszustand erfindungsgemäß um mehr als 90°, bevorzugt um mehr als 180° und ganz besonders bevorzugt um mehr als 270°, insbesondere entlang einer in der sich zumindest im Wesentlichen senkrecht zur Längsachse, insbesondere Vertikalachse, der Heizeinheit oder zur Längsachse, insbesondere Vertikalachse, der Vakuumkammer erstreckenden Ebene verlaufenden Umfangsrichtung der Vakuumkammer. Es ist auch denkbar, dass die Heizeinheit die Vakuumkammer entlang der Umfangsrichtung vollständig umgibt. Der Ausdruck "im Wesentlichen senkrecht" soll hier insbesondere eine Ausrichtung einer Richtung relativ zu einer Bezugsrichtung definieren, wobei die Richtung und die Bezugsrichtung, insbesondere in einer Projektionsebene betrachtet, einen Winkel von 90° einschließen und der Winkel eine maximale Abweichung von insbesondere kleiner als 8°, vorteilhaft kleiner als 5° und besonders vorteilhaft kleiner als 2° aufweist. Vorzugsweise sind die Heizelemente entlang einer gesamten Umfangserstreckung der Vakuumkammer gleichmäßig um die Vakuumkammer verteilt angeordnet. Es ist jedoch auch denkbar, dass die Heizelemente entlang der gesamten Umfangserstreckung der Vakuumkammer ungleichmäßig um die Vakuumkammer verteilt angeordnet sind. Bevorzugt wird die Heizeinheit zu einem Erzeugen der zumindest zwei Wärmebehandlungszonen, insbesondere Lötzonen, mit unterschiedlichen Temperaturen, insbesondere Löttemperaturen, zonenweise mittels der Steuer- oder Regeleinheit gesteuert oder geregelt. Unter einer "Steuer- oder Regeleinheit" soll insbesondere eine Einheit mit einem Informationseingang, einer Informationsverarbeitung und einer Informationsausgabe verstanden werden. Vorteilhaft weist die Steuer- oder Regeleinheit zumindest einen Prozessor, einen Speicher, Ein- und Ausgabemittel, weitere elektrische Bauteile, ein Betriebsprogramm, Regelroutinen, Steuerroutinen und/oder Berechnungsroutinen auf.

Vorzugsweise sind die Bauteile der Steuer- oder Regeleinheit auf einer gemeinsamen Platine angeordnet und/oder vorteilhaft in einem gemeinsamen Gehäuse angeordnet. Es ist jedoch auch denkbar, dass die Bauteile der Steuer- oder Regeleinheit einzeln ausgebildet sind, insbesondere verteilt in dem Gehäuse angeordnet sind, und zumindest datentechnisch miteinander verbunden sind. Mittels der erfindungsgemäßen Ausgestaltung kann vorteilhaft eine einfache Einstellung von unterschiedlichen Temperaturen, insbesondere Löttemperaturen, zu einem Bereitstellen der einzelnen Wärmebehandlungszonen, insbesondere Lötzonen, realisiert werden. Es kann vorteilhaft eine hohe Flexibilität eines Wärmebehandlungsprozesses, insbesondere Lötprozesses, ermöglicht werden. Es kann vorteilhaft eine Wärmebehandlung von mehreren Bauteilen mit unterschiedlichen Temperaturen in einem einzelnen Wärmebehandlungsprozess, insbesondere in einer einzelnen Vakuumkammer, ermöglicht werden. Es können, insbesondere bei einer Verwendung des Verfahrens in einer Vakuumlötanlage, vorteilhaft unterschiedliche Lote mit verschiedenen Schmelztemperaturen zeitgleich in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden. Es kann vorteilhaft ein hoher Durchsatz mittels des Verfahrens ermöglicht werden.

Ferner wird vorgeschlagen, dass die Heizeinheit zu einer Erzeugung von unterschiedlichen Temperaturen, insbesondere Löttemperaturen, in den Wärmebehandlungszonen, insbesondere Lötzonen, zonenweise mit unterschiedlichen Leistungen betrieben wird. Es ist denkbar, dass die Heizelemente der Heizeinheit, insbesondere zonenweise, als Heizelemente mit unterschiedlichen maximalen Leistungsstufen ausgebildet sind und dadurch zonenweise mit unterschiedlichen Leistungen betrieben werden oder dass die Heizelemente alle mit gleicher maximaler Leistungsstufe ausgebildet sind und zumindest temporär durch die Steuer- oder Regeleinheit zonenweise mit unterschiedlichen Leistungen betrieben werden, insbesondere zonenweise mit unterschiedlichen Stromstärken versorgt werden. Weitere, einem Fachmann als sinnvoll erscheinende Ausgestaltungen zu einem Betrieb der Heizeinheit mit unterschiedlichen Leistungen zu einem Erzeugen von Wärmebehandlungszonen, insbesondere Lötzonen, mit unterschiedlichen Temperaturen, insbesondere Löttemperaturen, sind ebenfalls denkbar. Sollen beispielsweise innerhalb der Vakuumkammer zwei, insbesondere drei, Wärmebehandlungszonen, insbesondere Lötzonen, mit unterschiedlichen Temperaturen, insbesondere Löttemperaturen, bereitgestellt werden, werden vorzugsweise Heizelemente, die einer Wärmebehandlungszone, insbesondere Lötzone, zugeordnet sind, mit einer hohen Leistung betrieben, während weitere Heizelemente, die einer weiteren Wärmebehandlungszone, insbesondere Lötzone, zugeordnet sind, mit einer geringen Leistung betrieben werden. Beispielsweise werden untere Heizelemente mit einer hohen Leistung betrieben, während obere und/oder mittlere Heizelemente mit einer geringen Leistung betrieben werden, insbesondere bei einer vertikal ausgerichteten Heizeinheit, bei der die Längsachse der Heizeinheit zumindest im Wesentlichen parallel zu einer Vertikallinie verläuft. Es ist jedoch auch denkbar, dass beispielsweise die unteren Heizelemente mit einer geringen Leistung betrieben, während obere und/oder mittlere Heizelemente mit einer hohen Leistung betrieben werden, insbesondere bei einer vertikal ausgerichteten Heizeinheit, bei der die Längsachse der Heizeinheit zumindest im Wesentlichen parallel zu einer Vertikallinie verläuft. Die Begriffe "untere Heizelemente", "obere Heizelemente" und "mittlere Heizelemente" beziehen sich insbesondere auf eine Anordnung der Heizelemente in Bezug auf die Vertikalachse der Heizeinheit, insbesondere bei einer vertikal ausgerichteten Heizeinheit. Bei einer horizontal ausgerichteten Heizeinheit, bei der die Längsachse der Heizeinheit zumindest im Wesentlichen parallel zu einer Horizontallinie verläuft, werden zu einer Bereitstellung von zwei, insbesondere drei, Wärmebehandlungszonen, insbesondere Lötzonen, mit unterschiedlichen Temperaturen beispielsweise linksseitig angeordnete Heizelemente mit einer hohen Leistung betrieben, während rechtsseitig angeordnete Heizelemente mit einer geringen Leistung betrieben werden. Die Begriffe "linksseitig angeordnete Heizelemente" und "rechtsseitig angeordnete Heizelemente" beziehen sich insbesondere auf eine Anordnung der Heizelemente in Bezug auf die Horizontallinie, insbesondere bei einer horizontal ausgerichteten Heizeinheit. Vorzugsweise werden infolge eines Betreibens der Heizeinheit mit zonenweise unterschiedlichen Leistungen Wärmebehandlungszonen, insbesondere Lötzonen, mit unterschiedlichen Temperaturen, insbesondere Löttemperaturen, innerhalb der Vakuumkammer bereitgestellt. Mittels der erfindungsgemäßen Ausgestaltung kann vorteilhaft eine steuer- oder regeltechnische und/oder konstruktiv einfache Realisierung von Wärmebehandlungszonen, insbesondere Lötzonen, mit unterschiedlichen Temperaturen, insbesondere Löttemperaturen, innerhalb der Vakuumkammer ermöglicht werden. Es kann vorteilhaft eine einfache Einstellung von unterschiedlichen Temperaturen, insbesondere Löttemperaturen, zu einem Bereitstellen der einzelnen Wärmebehandlungszonen, insbesondere Lötzonen, innerhalb der Vakuumkammer realisiert werden. Es kann vorteilhaft eine hohe Flexibilität eines Wärmebehandlungsprozesses, insbesondere Lötprozesses, ermöglicht werden. Es kann vorteilhaft eine Wärmebehandlung von mehreren Bauteilen mit unterschiedlichen Temperaturen in einem einzelnen Wärmebehandlungsprozess, insbesondere in einer einzelnen Vakuumkammer, ermöglicht werden. Es können, insbesondere bei einer Verwendung des Verfahrens in einer Vakuumlötanlage, vorteilhaft unterschiedliche Lote mit verschiedenen Schmelztemperaturen zeitgleich in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden. Es kann vorteilhaft ein hoher Durchsatz mittels des Verfahrens ermöglicht werden.

Die maximale Gesamterstreckung der Vakuumkammer wird bevorzugt durch die zumindest zwei, insbesondere die zumindest drei, Wärmebehandlungszonen, insbesondere Lötzonen, aufgeteilt, insbesondere definiert. Besonders bevorzugt wird, insbesondere bei einer vertikal ausgerichteten Heizeinheit und/oder Vakuumkammer, in einer unteren Wärmebehandlungszone, insbesondere Lötzone, der Wärmebehandlungszonen, insbesondere Lötzonen, eine höhere Temperatur, insbesondere Löttemperatur, eingestellt als eine Temperatur, insbesondere Löttemperatur, in einer oberen Wärmebehandlungszone, insbesondere Lötzone, der Wärmebehandlungszonen, insbesondere Lötzonen. Bevorzugt wird, insbesondere bei einer vertikal ausgerichteten Heizeinheit und/oder Vakuumkammer, in einer mittleren Wärmebehandlungszone, insbesondere Lötzone, der Wärmebehandlungszonen, insbesondere Lötzonen, die zwischen der oberen Wärmebehandlungszone, insbesondere Lötzone, und der unteren Wärmebehandlungszone, insbesondere Lötzone, angeordnet ist, eine mittlere Temperatur, insbesondere Löttemperatur, eingestellt, die größer ist als die Temperatur, insbesondere Löttemperatur, in der oberen Wärmebehandlungszone, insbesondere Lötzone, und kleiner ist als die Temperatur, insbesondere Löttemperatur, in der unteren Wärmebehandlungszone, insbesondere Lötzone. Es ist, insbesondere bei einer vertikal ausgerichteten Heizeinheit und/oder Vakuumkammer, jedoch auch denkbar, dass in der unteren Wärmebehandlungszone, insbesondere Lötzone, eine niedrige Temperatur, insbesondere Löttemperatur, eingestellt wird und in der oberen Wärmebehandlungszone, insbesondere Lötzone, eine hohe Temperatur, insbesondere Löttemperatur, eingestellt wird, wobei in der mittleren Wärmebehandlungszone, insbesondere Lötzone, eine Temperatur, insbesondere Löttemperatur, eingestellt wird, die höher ist als die Temperatur, insbesondere Löttemperatur, der unteren Wärmebehandlungszone, insbesondere Lötzone, und kleiner ist als die Temperatur, insbesondere Löttemperatur, in der oberen Wärmebehandlungszone, insbesondere Lötzone. Die oben beispielhaft aufgeführten Einstellungen der Temperaturen, insbesondere Löttemperaturen, der Wärmebehandlungszonen, insbesondere Lötzonen, sind analog auch auf eine horizontal ausgerichtete Heizeinheit und/oder Vakuumkammer übertragbar, wobei beispielsweise die Begriffe unten durch linksseitig, oben durch rechtsseitig und mittlere durch zwischen linksseitig und rechtsseitig ersetzt werden können. Andere Temperaturen, insbesondere Löttemperaturen, in den einzelnen Wärmebehandlungszonen, insbesondere Lötzonen, insbesondere bei mehr als drei Wärmebehandlungszonen, insbesondere Lötzonen, sind ebenfalls denkbar, um eine inhomogene Temperaturverteilung innerhalb der Vakuumkammer zu erzeugen. Mittels der erfindungsgemäßen Ausgestaltung, bei der entlang einer maximalen Gesamterstreckung der Vakuumkammer, insbesondere entlang der zumindest im Wesentlichen parallel zur Längsachse der Heizeinheit und/oder der Längsachse der Vakuumkammer verlaufenden Richtung, innerhalb der Vakuumkammer eine inhomogene Temperaturverteilung erzeugt wird, kann vorteilhaft eine Wärmebehandlung von mehreren Bauteilen mit unterschiedlichen Temperaturen in einem einzelnen Wärmebehandlungsprozess, insbesondere in einer einzelnen Vakuumkammer, ermöglicht werden. Es können, insbesondere bei einer Verwendung des Verfahrens in einer Vakuumlötanlage, vorteilhaft unterschiedliche Lote mit verschiedenen Schmelztemperaturen zeitgleich in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden. Es kann vorteilhaft ein hoher Durchsatz mittels des Verfahrens ermöglicht werden.

Des Weiteren wird vorgeschlagen, dass die Wärmebehandlungszonen, insbesondere Lötzonen, mit einem Temperaturunterschied, insbesondere Löttemperaturunterschied, von mehr als 5 K betrieben werden. Insbesondere werden die Wärmebehandlungszonen, insbesondere Lötzonen, mit einem Temperaturunterschied, insbesondere Löttemperaturunterschied, von mehr als 10 K, bevorzugt von mehr als 20 K und ganz besonders bevorzugt von mehr als 50 K betrieben. Vorzugsweise ist der Temperaturunterschied, insbesondere Löttemperaturunterschied, bezogen auf die in einem aktuellen Wärmebehandlungsprozess, insbesondere Lötprozess, höchste eingestellte Temperatur, insbesondere Löttemperatur, einer Wärmebehandlungszone, insbesondere Lötzone, insbesondere der unteren Wärmebehandlungszone, insbesondere Lötzone, und einer niedrigsten eingestellten Temperatur, insbesondere Löttemperatur, einer weiteren Wärmebehandlungszone, insbesondere Lötzone, insbesondere der oberen Wärmebehandlungszone, insbesondere Lötzone. Der Temperaturunterschied, insbesondere Löttemperaturunterschied, kann als absoluter Temperaturunterschied, insbesondere Löttemperaturunterschied, ausgebildet sein. Es ist auch denkbar, dass der Temperaturunterschied, insbesondere Löttemperaturunterschied, auf zwei direkt benachbarte Wärmebehandlungszonen, insbesondere Lötzonen, bezogen ist. Der Temperaturunterschied, insbesondere Löttemperaturunterschied, kann als relativer Temperaturunterschied, insbesondere Löttemperaturunterschied, ausgebildet sein. Mittels der erfindungsgemäßen Ausgestaltung kann vorteilhaft ein großes Einstellspektrum zu einer Nutzung unterschiedlicher Temperaturen zu einer Wärmbehandlung erreicht werden. Es kann vorteilhaft eine Wärmebehandlung von mehreren Bauteilen mit unterschiedlichen Temperaturen in einem einzelnen Wärmebehandlungsprozess, insbesondere in einer einzelnen Vakuumkammer, ermöglicht werden. Es können, insbesondere bei einer Verwendung des Verfahrens in einer Vakuumlötanlage, vorteilhaft unterschiedliche Lote mit verschiedenen Schmelztemperaturen zeitgleich in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden. Es kann vorteilhaft ein hoher Durchsatz mittels des Verfahrens ermöglicht werden.

Des Weiteren geht die Erfindung aus von einer, insbesondere von der bereits zuvor genannten, Vakuumlötanlage mit zumindest einer, insbesondere der bereits zuvor genannten, Vakuumkammer, mit zumindest einer, insbesondere der bereits zuvor genannten, an der Vakuumkammer angeordneten, insbesondere vertikal oder horizontal ausgerichteten, Heizeinheit, insbesondere Infrarotheizeinheit, die eine Vielzahl an Infrarotstrahlern aufweist, die an der Vakuumkammer angeordnet ist, und mit zumindest einer, insbesondere der bereits zuvor genannten, Steuer- oder Regeleinheit, insbesondere zu einem Durchführen des erfindungsgemäßen Verfahrens. Es wird vorgeschlagen, dass die Heizeinheit die Vakuumkammer in zumindest einem Betriebszustand um mehr als 90°umgibt, wobei die Vakuumkammer in zumindest zwei, insbesondere zumindest drei, als Lötzonen ausgebildete Wärmebehandlungszonen unterteilt ist, die für einen Lötprozess mit unterschiedlichen Löttemperaturen vorgesehen sind, wobei die Steuer- oder Regeleinheit dazu eingerichtet ist, die, insbesondere als Infrarotheizeinheit ausgebildete, Heizeinheit derart zu steuern oder zu regeln, dass entlang einer maximalen Gesamterstreckung der Vakuumkammer, insbesondere entlang der zumindest im Wesentlichen parallel zur Längsachse der als Infrarotheizeinheit ausgebildeten Heizeinheit verlaufenden Richtung, innerhalb der Vakuumkammer eine inhomogene Temperaturverteilung erzeugt wird, insbesondere in zumindest einem Betriebszustand der Vakuumanlage vorherrscht. Bevorzugt ist die Vakuumanlage als Werkzeugvakuumlötanlage ausgebildet, die zu einem Löten von Hartmetall-, Keramik- und Diamantwerkzeugen vorgesehen ist. Es ist jedoch auch denkbar, dass die Vakuumanlage eine anders geartete Ausgestaltung aufweist, wie beispielsweise eine Ausgestaltung als Vakuumanlage zu einem Vakuumglühen von Werkstücken, eine Ausgestaltung als Vakuumanlage zu einem Reinigen oder einem Sterilisieren von Bauteilen in einem Vakuum o.dgl..

Bevorzugt weist die Vakuumkammer einen runden, insbesondere kreisförmigen Querschnitt auf. Der Querschnitt der Vakuumkammer verläuft vorzugsweise in einer sich zumindest im Wesentlichen senkrecht zu einer Längsachse, insbesondere Vertikalachse, der Heizeinheit oder zu einer Längsachse, insbesondere Vertikalachse, der Vakuumkammer erstreckenden Ebene. Es ist auch denkbar, dass die Vakuumkammer einen polygonalen Querschnitt, eine Kombination aus einem runden und einem polygonalen Querschnitt oder einen anderen, einem Fachmann als sinnvoll erscheinenden Querschnitt aufweist. Die Vakuumkammer wird vorzugsweise von einem hohlzylindrischen Körper, insbesondere einem Quarzglashohlzylinder, gebildet. Es ist jedoch auch denkbar, dass die Vakuumkammer von einem anderen, einem Fachmann als sinnvoll erachteten Bauteil oder aus einem anderen, einem Fachmann als sinnvoll erscheinenden Werkstoff gebildet ist, wie beispielsweise aus einem hohlzylindrischen Metallkörper o.dgl..

Insbesondere ist der Quarzglashohlzylinder in zumindest einem Betriebszustand auf zwei Seiten verschlossen/verschließbar, um eine Vakuumerzeugung innerhalb des Innenvolumens des Quarzglashohlzylinders auf eine, einem Fachmann bereits bekannte Art und Weise zu ermöglichen. Zu bearbeitende Werkstücke sind bevorzugt innerhalb der Vakuumkammer anordenbar. Die Vakuumkammer, insbesondere der Quarzglashohlzylinder, ist bevorzugt beweglich, insbesondere an einem Maschinengestell der Vakuumanlage, gelagert, insbesondere zu einem Ermöglichen eines Einsetzens von zu bearbeitenden Werkstücken in die Vakuumkammer oder einer Entnahme von bearbeiteten, insbesondere gelöteten, Werkstücken aus der Vakuumkammer. Es ist jedoch auch denkbar, dass die Vakuumkammer mit einem beweglich gelagerten Verschlusselement der Vakuumanlage, wie beispielsweise einer Türe, einer Klappe o. dgl., versehen ist, um einen Zugang zur Vakuumkammer zu ermöglichen. Die Vakuumkammer weist bevorzugt zumindest eine Längsachse auf. Vorzugsweise sind die Wärmebehandlungszonen, insbesondere Lötzonen, entlang der Längsachse der Heizeinheit und/oder der Längsachse der Vakuumkammer aufeinanderfolgend, insbesondere übereinander, angeordnet. Die Längsachse, insbesondere Vertikalachse, der Vakuumkammer verläuft bevorzugt koaxial zur Längsachse, insbesondere Vertikalachse, der Heizeinheit. Bevorzugt ist die Vakuumkammer symmetrisch, insbesondere rotationssymmetrisch, zur Längsachse, insbesondere Vertikalachse, der Vakuumkammer ausgebildet. Die Längsachse der Heizeinheit und/oder die Längsachse der Vakuumkammer können/kann entlang einer Vertikallinie oder entlang einer Horizontallinie ausgerichtet sein. Die Horizontallinie verläuft vorzugsweise zumindest im Wesentlichen parallel zu einer Bodenstandfläche oder zu einer Bodenstandebene der Vakuumanlage. Die Vertikallinie verläuft bevorzugt zumindest im Wesentlichen senkrecht zur Bodenstandfläche oder zur Bodenstandebene der Vakuumanlage. Die Bodenstandfläche oder die Bodenstandebene der Vakuumanlage ist vorzugsweise eine Fläche oder eine Ebene, mit der die Vakuumanlage auf einem Untergrund steht und/oder über die sich Betriebs- und/oder Gewichtskräfte der Vakuumanlage an einem Boden abstützen. Die Bodenstandfläche oder die Bodenstandebene kann auf eine, einem Fachmann bereits bekannte Art und Weise an einem Maschinengestell, an einem Gehäuse, an Standfüßen o. dgl. der Vakuumanlage angeordnet sein oder dadurch aufgespannt sein.

Die Heizeinheit ist bevorzugt als Wärmestrahlungsheizeinheit, insbesondere als Infrarotheizeinheit, ausgebildet. Bevorzugt weist die Heizeinheit zumindest einen Infrarotstrahler, insbesondere eine Vielzahl an Infrarotstrahlern, auf, der/die an der Vakuumkammer angeordnet ist/sind. Vorzugsweise umgibt die Heizeinheit die Vakuumkammer, insbesondere entlang einer Umfangsrichtung. Bevorzugt ist die Heizeinheit beweglich an einem Maschinengestell der Vakuumanlage gelagert, insbesondere schwenkbar gelagert. Vorzugsweise sind zumindest einzelne Heizelemente der Heizeinheit oder in Gruppen zusammengefasste Heizelemente der Heizeinheit gemeinsam relativ zur Vakuumkammer beweglich gelagert, insbesondere zu einem Realisieren einer Schwenkbewegung, beispielsweise um ein Wegschwenken von einzelnen Heizelementen, wie beispielsweise für Wartungszwecke o. dgl., zu ermöglichen. Vorzugsweise verläuft eine Bewegungsachse der Heizeinheit zumindest im Wesentlichen parallel zur Längsachse der Heizeinheit. Es ist jedoch auch denkbar, dass die Bewegungsachse der Heizeinheit quer, insbesondere zumindest im Wesentlichen senkrecht, zur Längsachse der Heizeinheit verläuft.

Vorzugsweise umfasst die Vakuumanlage zumindest eine Unterdruckeinheit zu einem Erzeugen eines Unterdrucks in der Vakuumkammer in zumindest einem Betriebszustand. Die Unterdruckeinheit weist vorzugsweise eine, einem Fachmann bereits bekannte Funktionsweise und eine, einem Fachmann bereits bekannte Ausgestaltung auf. Die Unterdruckeinheit ist bevorzugt an dem Maschinengestell, insbesondere innerhalb des Gehäuses, der Vakuumanlage angeordnet. Insbesondere ist zumindest eine Unterdruckleitung mit der Vakuumkammer fluidtechnisch verbunden, insbesondere um in zumindest einem Betriebszustand einen Unterdruck innerhalb der Vakuumkammer zu erzeugen.

Mittels der erfindungsgemäßen Ausgestaltung der Vakuumanlage kann vorteilhaft eine hohe Flexibilität eines Wärmebehandlungsprozesses, insbesondere eines Lötprozesses, ermöglicht werden. Es kann vorteilhaft eine Wärmebehandlung von mehreren Bauteilen mit unterschiedlichen Temperaturen in einem einzelnen Wärmebehandlungsprozess in einer einzelnen Anlage, insbesondere in einer einzelnen Vakuumkammer, ermöglicht werden. Es können, insbesondere bei einer Ausgestaltung der Vakuumanlage als Vakuumlötanlage, vorteilhaft unterschiedliche Lote mit verschiedenen Schmelztemperaturen zeitgleich in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden. Es kann vorteilhaft ein hoher Durchsatz mittels der Vakuumanlage ermöglicht werden.

Ferner wird vorgeschlagen, dass die Wärmebehandlungszonen, insbesondere Lötzonen, entlang einer zumindest im Wesentlichen parallel zur Längsachse, insbesondere Vertikalachse, der Heizeinheit verlaufenden Richtung aufeinanderfolgend, insbesondere übereinander, angeordnet sind. Vorzugsweise sind zumindest zwei Wärmebehandlungszonen, insbesondere Lötzonen, direkt aneinander angrenzend innerhalb der Vakuumkammer angeordnet. Es ist jedoch auch denkbar, dass die Wärmebehandlungszonen, insbesondere Lötzonen, innerhalb der Vakuumkammer relativ zueinander beabstandet angeordnet sind. Bei einer vertikal ausgerichteten Heizeinheit und/oder Vakuumkammer, bei der die Längsachse der Heizeinheit und/oder die Längsachse der Vakuumkammer zumindest im Wesentlichen parallel zur Vertikallinie verlaufen/verläuft, sind die Wärmebehandlungszonen, insbesondere Lötzonen, bevorzugt entlang der Längsachse der Vakuumkammer übereinander angeordnet. Bei einer horizontal ausgerichteten Heizeinheit und/oder Vakuumkammer, bei der die Längsachse der Heizeinheit und/oder die Längsachse der Vakuumkammer zumindest im Wesentlichen parallel zur Horizontallinie verlaufen/verläuft, sind die Wärmebehandlungszonen, insbesondere Lötzonen, vorzugsweise entlang der Längsachse der Vakuumkammer nebeneinander angeordnet. Mittels der erfindungsgemäßen Ausgestaltung kann vorteilhaft eine kompakte Vakuumanlage realisiert werden, die innerhalb einer einzelnen Vakuumkammer vorteilhaft eine Wärmebehandlung von mehreren Bauteilen mit unterschiedlichen Temperaturen in einem einzelnen Wärmebehandlungsprozess ermöglichen kann. Es können, insbesondere bei einer Ausgestaltung der Vakuumanlage als Vakuumlötanlage, vorteilhaft unterschiedliche Lote mit verschiedenen Schmelztemperaturen zeitgleich in einem einzelnen Lötprozess verarbeitet werden.

Zudem wird vorgeschlagen, dass die Vakuumanlage zumindest eine, insbesondere thermische, Abschirmeinheit zu einer, insbesondere physischen, Unterteilung der Vakuumkammer in die verschiedenen Wärmebehandlungszonen, insbesondere Lötzonen, umfasst, wobei die Abschirmeinheit zumindest in einem Zonenübergangsbereich zwischen zumindest zwei benachbarten Wärmebehandlungszonen, insbesondere Lötzonen, zumindest ein Abschirmelement, insbesondere paarweise angeordnete Abschirmelemente, aufweist, das/die zu einem Unterteilen der Wärmebehandlungszonen, insbesondere Lötzonen, entlang der Vertikalachse der Heizeinheit vorgesehen ist/sind, insbesondere in einem geschlossenen Zustand der Vakuumkammer. Die Abschirmeinheit ist vorzugsweise dazu vorgesehen, ein Einwirken von einer Wärmebehandlungszone, insbesondere Lötzone, zugeordneten Heizelementen der Heizeinheit auf eine weitere Wärmebehandlungszone, insbesondere Lötzone, zumindest gering zu halten. Bevorzugt ist die Abschirmeinheit dazu vorgesehen, ein Einwirken von einer Wärmestrahlung von den der Wärmebehandlungszone, insbesondere Lötzone, zugeordneten Heizelementen der Heizeinheit auf Werkstücke, die in der weiteren Wärmebehandlungszone, insbesondere Lötzone, angeordnet sind, zumindest gering zu halten. Das/die Abschirmelement/e ist/sind vorzugsweise als Abschirmblech/e ausgebildet. Das/die Abschirmelement/e können aus einem Lochblech oder aus einem massiven Blechbauteil gebildet sein. Bevorzugt ist/sind das/die Abschirmelement/e aus einem metallischen Werkstoff ausgebildet und/oder weisen zumindest eine, insbesondere für Infrarotstrahlung, reflektierende Oberfläche, insbesondere Oberflächenbeschichtung, auf. Insbesondere erstreckt/erstrecken sich das/die Abschirmelement/e über weniger als 100 % eines gesamten Innenquerschnitts der Vakuumkammer, insbesondere um einen Luftaustausch zwischen Wärmebehandlungszonen, insbesondere Lötzonen, zu einem Erzeugen eines Unterdrucks in der gesamten Vakuumkammer zu ermöglichen.

Insbesondere weist/weisen das/die Abschirmelement/e zumindest eine Verbindungsschnittstelle zu einer Aufnahme eines Werkstückträgers der Vakuumanlage auf. Der Werkstückträger ist bevorzugt zu einer Aufnahme von in der Vakuumkammer zu bearbeitenden, insbesondere zu erwärmenden, Werkstücken vorgesehen. Mittels der erfindungsgemäßen Ausgestaltung kann konstruktiv einfach ein gezieltes Einwirken einer Wärmestrahlung auf Werkstücke in einer einzelnen Wärmebehandlungszone, insbesondere Lötzone, erreicht werden. Es können vorteilhaft unterschiedliche Temperaturen, insbesondere Löttemperaturen, in den einzelnen Wärmebehandlungszonen, insbesondere Lötzonen, bereitgestellt werden, die individuell auf die in den Wärmebehandlungszonen, insbesondere Lötzonen, zu bearbeitenden Werkstücke einstellbar sind. Es kann vorteilhaft ein geringer Einfluss von Temperaturunterschieden in einer der Wärmebehandlungszonen, insbesondere Lötzonen, auf die andere der Wärmebehandlungszonen, insbesondere Lötzonen, erreicht werden.

Weiterhin wird vorgeschlagen, dass die Steuer- oder Regeleinheit dazu eingerichtet ist, die Heizeinheit derart zu steuern oder zu regeln, dass in den Wärmebehandlungszonen, insbesondere Lötzonen, unterschiedliche Temperaturen, insbesondere Löttemperaturen, eingestellt sind, insbesondere um zumindest 5 K voneinander abweichende Temperaturen, insbesondere Löttemperaturen. Insbesondere wird die Heizeinheit mittels der Steuer- oder Regeleinheit derart gesteuert oder geregelt, dass die Wärmebehandlungszonen, insbesondere Lötzonen, mit einem Temperaturunterschied, insbesondere Löttemperaturunterschied, von mehr als 10 K, bevorzugt von mehr als 20 K und ganz besonders bevorzugt von mehr als 50 K betrieben werden. Beispielsweise kann die Heizeinheit bei einer vertikal ausgerichteten Heizeinheit und/oder Vakuumkammer mittels der Steuer- oder Regeleinheit derart gesteuert werden, dass in einer unteren Wärmebehandlungszone, insbesondere Lötzone, der Wärmebehandlungszonen, insbesondere Lötzonen, eine Temperatur, insbesondere Löttemperatur, von 600 °C eingestellt wird und in einer oberen Wärmebehandlungszone, insbesondere Lötzone, der Wärmebehandlungszonen, insbesondere Lötzonen, eine Temperatur, insbesondere Löttemperatur, von 450 °C eingestellt wird. Insbesondere kann beispielsweise bei einem Vorhandensein von drei Wärmebehandlungszonen, insbesondere Lötzonen, und bei einer vertikal ausgerichteten Heizeinheit und/oder Vakuumkammer die Heizeinheit mittels der Steuer- oder Regeleinheit derart gesteuert werden, dass zusätzlich zu den oben genannten beispielhaften Temperaturen, in einer mittleren Wärmebehandlungszone, insbesondere Lötzone, der Wärmebehandlungszonen, insbesondere Lötzonen, die zwischen der oberen Wärmebehandlungszone, insbesondere Lötzone, und der unteren Wärmebehandlungszone, insbesondere Lötzone, angeordnet ist, eine Temperatur von 520 °C eingestellt wird. Die beispielhaft angegebenen Temperaturen der Wärmebehandlungszonen, insbesondere Lötzonen, können auch andere, einem Fachmann als sinnvoll erscheinende Werte aufweisen. Mittels der erfindungsgemäßen Ausgestaltung kann vorteilhaft eine Wärmebehandlung von mehreren Bauteilen mit unterschiedlichen Temperaturen in einem einzelnen Wärmebehandlungsprozess, insbesondere in einer einzelnen Vakuumkammer, ermöglicht werden. Es können, insbesondere bei einer Ausgestaltung der Vakuumanlage als Vakuumlötanlage, vorteilhaft unterschiedliche Lote mit verschiedenen Schmelztemperaturen zeitgleich in einem einzelnen Lötprozess verarbeitet werden. Es kann vorteilhaft eine kosten- und zeitsparende Bearbeitung von mit unterschiedlichen Loten zu lötenden Werkzeugschneiden in einem einzelnen Lötprozess erreicht werden.

Das erfindungsgemäße Verfahren und/oder die erfindungsgemäße Vakuumanlage sollen/soll hierbei nicht auf die oben beschriebene Anwendung und Ausführungsform beschränkt sein. Insbesondere können/kann das erfindungsgemäße Verfahren und/oder die erfindungsgemäße Vakuumanlage zu einer Erfüllung einer hierin beschriebenen Funktionsweise eine von einer hierin genannten Anzahl von einzelnen Elementen, Bauteilen und Einheiten sowie Verfahrensschritten abweichende Anzahl aufweisen. Zudem sollen bei den in dieser Offenbarung angegebenen Wertebereichen auch innerhalb der genannten Grenzen liegende Werte als offenbart und als beliebig einsetzbar gelten.

### Zeichnungen

Weitere Vorteile ergeben sich aus der folgenden Zeichnungsbeschreibung. In den Zeichnungen ist ein Ausführungsbeispiel der Erfindung dargestellt. Die Zeichnungen, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

Es zeigen:
- Fig. 1: eine erfindungsgemäße Vakuumanlage, insbesondere Vakuumlötanlage, mit einer geöffneten Schiebetür in einer schematischen Darstellung,
- Fig. 2: eine weitere Ansicht der erfindungsgemäßen Vakuumanlage mit einer geöffneten Schiebetür und einer geöffneten Heizeinheit der erfindungsgemäßen Vakuumanlage sowie einer gering nach oben gefahrenen Vakuumkammer der erfindungsgemäßen Vakuumanlage in einer schematischen Darstellung,
- Fig. 3: eine Detailansicht einer Vakuumkammer der erfindungsgemäßen Vakuumanlage mit der daran angeordneten Heizeinheit der erfindungsgemäßen Vakuumanlage in einer schematischen Darstellung,
- Fig. 4: eine Detailansicht der Vakuumkammer in einer schematischen Darstellung,
- Fig. 5: eine Detailansicht einer Abschirmeinheit der erfindungsgemäßen Vakuumanlage in einem geöffneten und nach oben gefahrenen Zustand der Vakuumkammer in einer schematischen Darstellung und
- Fig. 6: einen schematischen Ablauf eines erfindungsgemäßen Verfahrens zu einem Betrieb einer erfindungsgemäßen Vakuumanlage, insbesondere einer Vakuumlötanlage.

### Beschreibung des Ausführungsbeispiels

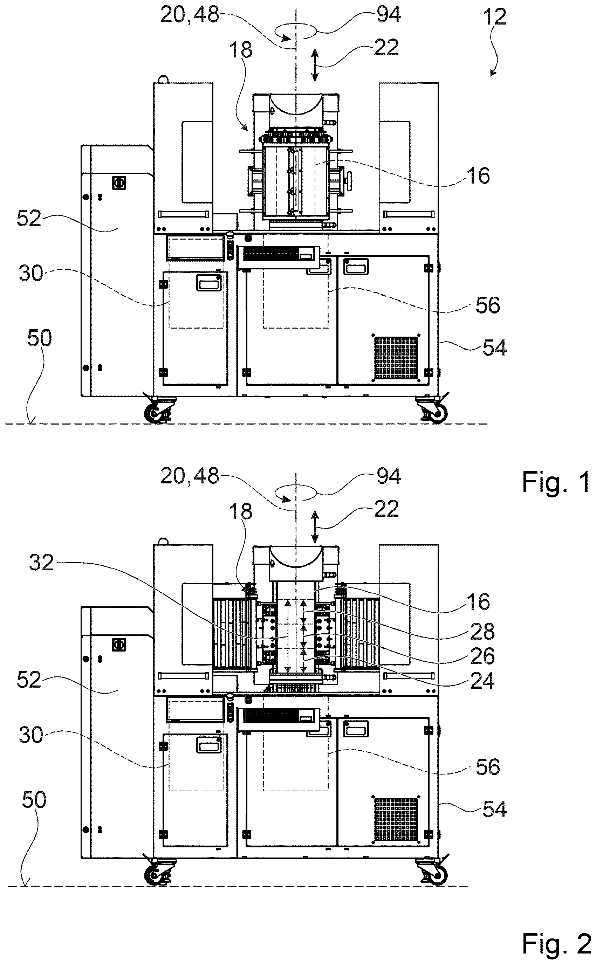

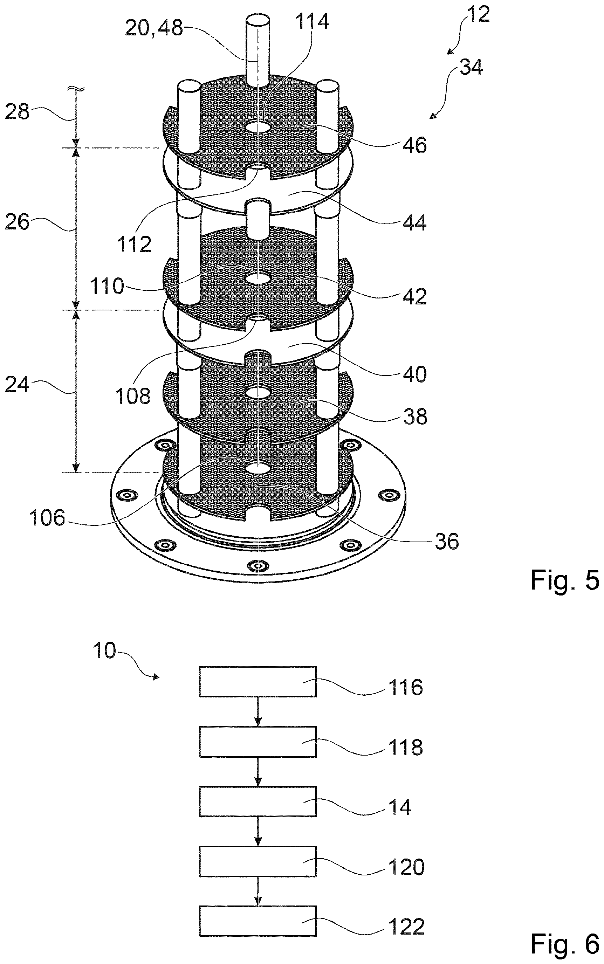

Figur 1 zeigt eine Vakuumanlage 12 zu einer Wärmebehandlung von Werkstücken in einem Vakuum. Die Vakuumanlage 12 ist vorzugsweise als Vakuumlötanlage ausgebildet, insbesondere als Werkzeugvakuumlötanlage zu einem Löten von Hartmetall-, Keramik- und Diamantwerkzeugen. Es ist jedoch auch denkbar, dass die Vakuumanlage 12 eine andere, einem Fachmann als sinnvoll erscheinende Ausgestaltung aufweist, wie beispielsweise eine Ausgestaltung als Vakuumanlage zu einem Vakuumglühen von Werkstücken, als Vakuumanlage zu einem Reinigen oder einem Sterilisieren von Bauteilen o. dgl. Die Vakuumanlage 12 umfasst zumindest eine Vakuumkammer 16 (vgl. auch Figuren 2 bis 4), zumindest eine an der Vakuumkammer 16 angeordnete, insbesondere vertikal oder horizontal ausgerichtete, Heizeinheit 18 (vgl. auch Figuren 2 bis 4) und zumindest eine Steuer- oder Regeleinheit 30. Die Steuer- oder Regeleinheit 30 ist zumindest zu einem Steuern oder Regeln der Heizeinheit 18 und/oder eines Unterdrucks in der Vakuumkammer 16 vorgesehen. Vorzugsweise umfasst die Steuer- oder Regeleinheit 30 zumindest ein Betriebsprogramm, das ein Verfahren 10 zu einem Betrieb der Vakuumanlage 12 aufweist (vgl. Figur 6). Vorzugsweise ist die Beschreibung der Vakuumanlage 12 und deren Funktionsweise hinsichtlich etwaiger Verfahrensschritte, die nicht explizit im Zusammenhang mit der Figur 6 beschrieben werden, analog auch auf weitere Verfahrensschritte des Verfahrens 10 anzuwenden.

Die Vakuumkammer 16 ist in dem in den Figuren 1 bis 5 dargestellten Ausführungsbeispiel der Vakuumanlage 12 vertikal ausgerichtet. Eine Längsachse 48 der Vakuumkammer 16 ist bevorzugt zumindest im Wesentlichen parallel zu einer Vertikallinie und/oder zu einer Bodenstandebene 50 der Vakuumanlage 12 ausgerichtet. Es ist jedoch auch denkbar, dass die Vakuumkammer 16 in einer alternativen, hier nicht dargestellten Ausgestaltung der Vakuumanlage 12 horizontal ausgerichtet ist, insbesondere dass die Längsachse 48 der Vakuumkammer 16 zumindest im Wesentlichen parallel zu einer Horizontallinie und/oder zur Bodenstandebene 50 der Vakuumanlage 12 ausgerichtet ist. Die Vakuumkammer 16 ist vorzugsweise als hohlzylindrischer Körper, insbesondere als Quarzglashohlzylinder, ausgebildet. Die Vakuumkammer 16 umgibt einen Werkstückaufnahmebereich der Vakuumanlage 12, in dem zu bearbeitende, insbesondere zu erwärmende, Werkstücke anordenbar sind. Die Vakuumanlage 12 umfasst zu einer Anordnung von Werkstücken bevorzugt zumindest einen Werkstückträger (hier nicht näher dargestellt), der auswechselbar in der Vakuumkammer 16 anordenbar ist. Die Vakuumkammer 16 ist entlang einer zumindest im Wesentlichen parallel zur Längsachse 48 der Vakuumkammer 16 verlaufenden Bewegungsachse beweglich, insbesondere translatorisch, beweglich an einem Gehäuse 52 und/oder an einem Maschinengestell 54 der Vakuumanlage 12 gelagert. Insbesondere ist die Vakuumkammer 16 zusammen mit der Heizeinheit 18 beweglich, insbesondere translatorisch, beweglich an dem Gehäuse 52 und/oder an dem Maschinengestell 54 der Vakuumanlage 12 gelagert. Bevorzugt ist infolge einer Bewegung der Vakuumkammer 16, insbesondere zusammen mit der Heizeinheit 18, relativ zum Gehäuse 52 und/oder zum Maschinengestell 54 der Vakuumanlage 12 eine Bestückung des Werkstückaufnahmebereichs der Vakuumanlage 12 mit zu bearbeitenden Werkstücken und/oder eine Entnahme von bearbeiteten Werkstücken möglich. Bevorzugt weist die Vakuumanlage 12 eine Antriebseinheit (hier nicht näher dargestellt) zu einer Bewegung der Vakuumkammer 16, insbesondere zusammen mit der Heizeinheit 18, entlang der und/oder um die Bewegungsachse auf. Die Antriebseinheit ist bevorzugt an dem Maschinengestell 54, insbesondere innerhalb des Gehäuses 52, der Vakuumanlage 12 angeordnet.

Vorzugsweise umfasst die Vakuumanlage 12 zumindest eine Unterdruckeinheit 56 zu einem Erzeugen eines Unterdrucks in der Vakuumkammer 16 in zumindest einem Betriebszustand, insbesondere in einem geschlossenen Zustand der Vakuumkammer 16. Die Unterdruckeinheit 56 weist vorzugsweise eine, einem Fachmann bereits bekannte Funktionsweise und eine, einem Fachmann bereits bekannte Ausgestaltung auf. Die Unterdruckeinheit 56 ist bevorzugt an dem Maschinengestell 54, insbesondere innerhalb des Gehäuses 52, der Vakuumanlage 12 angeordnet. Insbesondere ist zumindest eine Unterdruckleitung (hier nicht näher dargestellt) mit der Vakuumkammer 16 fluidtechnisch verbunden, insbesondere um in zumindest einem Betriebszustand einen Unterdruck innerhalb der Vakuumkammer 16 zu erzeugen. Vorzugsweise sind Werkstücke, die innerhalb der Vakuumkammer 16 angeordnet sind, mittels des durch die Unterdruckeinheit 56 erzeugten Unterdrucks in einem Vakuum mit Wärme behandelbar, die von der Heizeinheit 18 in die Vakuumkammer 16 einbringbar ist.

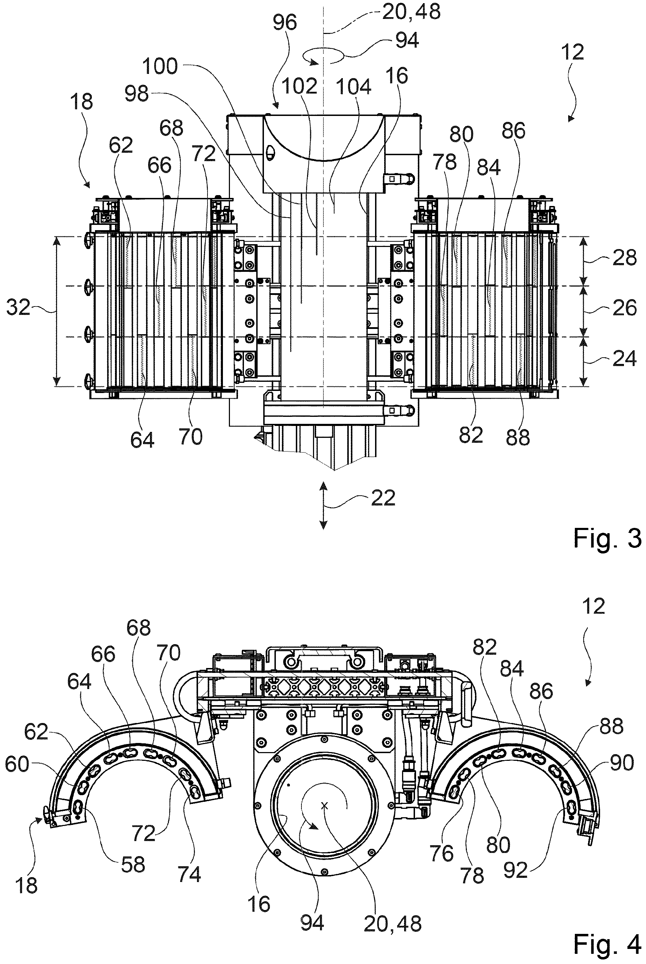

Die Heizeinheit 18 ist an der Vakuumkammer 16 angeordnet. Vorzugsweise umgibt die Heizeinheit 18 die Vakuumkammer 16 entlang einer Umfangsrichtung 94, insbesondere in einem geschlossenen Zustand der Heizeinheit 18. insbesondere ist die Heizeinheit 18 in dem in den Figuren 1 bis 5 dargestellten Ausführungsbeispiel der Vakuumanlage 12 vertikal ausgerichtet. Eine Längsachse 20 der Heizeinheit 18 ist bevorzugt zumindest im Wesentlichen parallel zur Vertikallinie und/oder zur Bodenstandebene 50 der Vakuumanlage 12 ausgerichtet. Es ist jedoch auch denkbar, dass die Heizeinheit 18 in einer alternativen, hier nicht dargestellten Ausgestaltung der Vakuumanlage 12 horizontal ausgerichtet ist, insbesondere dass die Längsachse 20 der Heizeinheit 18 zumindest im Wesentlichen parallel zur Horizontallinie und/oder zur Bodenstandebene 50 der Vakuumanlage 12 ausgerichtet ist. Die Längsachse 20 der Heizeinheit 18 ist vorzugsweise zumindest im Wesentlichen parallel, insbesondere koaxial, zur Längsachse 48 der Vakuumkammer 16 ausgerichtet. Die Heizeinheit 18 ist bevorzugt als Wärmestrahlungsheizeinheit, insbesondere als Infrarotheizeinheit, ausgebildet. Bevorzugt weist die Heizeinheit 18 zumindest ein Heizelement, das als Wärmestrahler ausgebildet ist, auf, insbesondere eine Vielzahl an Heizelementen, die als Wärmestrahler ausgebildet sind (vgl. Figuren 3 und 4). Bevorzugt weist die Heizeinheit 18 zumindest einen Infrarotstrahler 58, 60, 62, 64, 66, 68, 70, 72, 74, 76, 78, 80, 82, 84, 86, 88, 90, 92, insbesondere eine Vielzahl an Infrarotstrahlern 58, 60, 62, 64, 66, 68, 70, 72, 74, 76, 78, 80, 82, 84, 86, 88, 90, 92, auf, der/die an der Vakuumkammer 16 angeordnet ist/sind (vgl. Figuren 3 und 4). Vorzugsweise umfasst die Heizeinheit 18 achtzehn Infrarotstrahler 58, 60, 62, 64, 66, 68, 70, 72, 74, 76, 78, 80, 82, 84, 86, 88, 90, 92, die entlang der Umfangsrichtung 94 gleichmäßig verteilt an der Vakuumkammer 16 angeordnet sind. Es ist jedoch auch denkbar, dass die Heizeinheit 18 eine von achtzehn abweichende Anzahl an Infrarotstrahlern 58, 60, 62, 64, 66, 68, 70, 72, 74, 76, 78, 80, 82, 84, 86, 88, 90, 92 aufweist, die entlang der Umfangsrichtung 94 gleichmäßig oder ungleichmäßig verteilt an der Vakuumkammer 16 angeordnet sind.

Bevorzugt ist die Heizeinheit 18 beweglich an der Vakuumkammer 16 gelagert, insbesondere schwenkbar gelagert. Vorzugsweise sind zumindest einzelne Heizelemente, insbesondere Infrarotstrahler 58, 60, 62, 64, 66, 68, 70, 72, 74, 76, 78, 80, 82, 84, 86, 88, 90, 92, der Heizeinheit 18 oder in Gruppen zusammengefasste Heizelemente, insbesondere Infrarotstrahler 58, 60, 62, 64, 66, 68, 70, 72, 74, 76, 78, 80, 82, 84, 86, 88, 90, 92, der Heizeinheit 18 gemeinsam relativ zur Vakuumkammer 16 beweglich gelagert, insbesondere zu einem Realisieren einer Schwenkbewegung, beispielsweise um ein Wegschwenken von einzelnen Heizelementen, wie beispielsweise für Wartungszwecke o. dgl., zu ermöglichen (vgl. Figur 4). Vorzugsweise verläuft eine Bewegungsachse der Heizeinheit 18 zumindest im Wesentlichen parallel zur Längsachse 20 der Heizeinheit 18.

Es ist jedoch auch denkbar, dass die Bewegungsachse der Heizeinheit 18 quer, insbesondere zumindest im Wesentlichen senkrecht, zur Längsachse 20 der Heizeinheit 18 verläuft.

Die Vakuumkammer 16 ist in zumindest zwei, insbesondere zumindest drei, Wärmebehandlungszonen 24, 26, 28, insbesondere Lötzonen, unterteilt (vgl. Figur 3), die für einen Wärmebehandlungsprozess, insbesondere Lötprozess, mit unterschiedlichen Temperaturen, insbesondere Löttemperaturen, vorgesehen sind. Die Wärmebehandlungszonen 24, 26, 28, insbesondere Lötzonen, sind vorzugsweise entlang einer zumindest im Wesentlichen parallel zur Längsachse 20, insbesondere Vertikalachse, der Heizeinheit 18 und/oder der Längsachse 48 der Vakuumkammer 16 verlaufenden Richtung 22 aufeinanderfolgend, insbesondere übereinander, angeordnet. Vorzugsweise sind zumindest zwei der Wärmebehandlungszonen 24, 26, 28, insbesondere Lötzonen, direkt aneinander angrenzend innerhalb der Vakuumkammer 16 angeordnet. Es ist jedoch auch denkbar, dass die Wärmebehandlungszonen 24, 26, 28, insbesondere Lötzonen, innerhalb der Vakuumkammer 16 relativ zueinander beabstandet angeordnet sind.

Vorzugsweise weist die Heizeinheit 18 je Wärmebehandlungszone 24, 26, 28, insbesondere Lötzone, zumindest ein Heizelement auf, das der entsprechenden Wärmebehandlungszone 24, 26, 28, insbesondere Lötzone, zugeordnet ist. Bevorzugt weist die Heizeinheit 18 je Wärmebehandlungszone 24, 26, 28, insbesondere Lötzone, zumindest drei, insbesondere zumindest sechs, Heizelemente, insbesondere Infrarotstrahler 58, 60, 62, 64, 66, 68, 70, 72, 74, 76, 78, 80, 82, 84, 86, 88, 90, 92, auf, die der entsprechenden Wärmebehandlungszone 24, 26, 28, insbesondere Lötzone, zugeordnet sind. Es ist jedoch auch denkbar, dass die Heizeinheit 18 eine von drei, insbesondere von sechs, abweichende Anzahl an Heizelementen je Wärmebehandlungszone 24, 26, 28, insbesondere Lötzone, aufweist, wie beispielsweise zumindest zwei, zumindest vier, zumindest acht Heizelemente je Wärmebehandlungszone 24, 26, 28, insbesondere Lötzone, o. dgl. Bevorzugt sind die einer Wärmebehandlungszone 24, 26, 28, insbesondere Lötzone, zugeordneten Heizelemente zu einem Großteil in einem Bereich der Heizeinheit 18 angeordnet, der entlang der zumindest im Wesentlichen parallel zur Längsachse 20, insbesondere Vertikalachse, der Heizeinheit 18 verlaufenden Richtung 22 versetzt zu einem weiteren Bereich der Heizeinheit 18 angeordnet ist, in dem die zumindest einer weiteren Wärmebehandlungszone 24, 26, 28, insbesondere Lötzone, zugeordneten Heizelemente zu einem Großteil angeordnet sind. Bevorzugt sind die einer Wärmebehandlungszone 24, 26, 28, insbesondere Lötzone, zugeordneten Heizelemente zu einem Großteil in einem eine Art Hohlkreiszylinder beschreibenden Bereich der Heizeinheit 18, der die Vakuumkammer 16 umgibt, angeordnet, wobei die zumindest einer weiteren Wärmebehandlungszone 24, 26, 28, insbesondere Lötzone, zugeordneten Heizelemente in einem weiteren eine Art Hohlkreiszylinder beschreibenden Bereich der Heizeinheit 18, der die Vakuumkammer 16 umgibt, angeordnet sind (vgl. Figuren 3 und 4). Der eine Art Hohlkreiszylinder beschreibende Bereich der Heizeinheit 18 und der weitere eine Art Hohlkreiszylinder beschreibende Bereich der Heizeinheit 18 können entlang der zumindest im Wesentlichen parallel zur Längsachse 20, insbesondere Vertikalachse, der Heizeinheit 18 verlaufenden Richtung 22 direkt aneinander angrenzend oder voneinander beabstandet, insbesondere unter Zwischenschaltung von zumindest einem zusätzlichen Bereich mit Heizelementen, angeordnet sein. Die Heizeinheit 18 umfasst in Abhängigkeit von einer Anzahl bereitzustellender Wärmebehandlungszonen 24, 26, 28, insbesondere Lötzonen, eine entsprechende Anzahl an Bereichen, insbesondere eine Art Hohlkreiszylinder beschreibende Bereiche, in denen Heizelemente zu einem Erzeugen von unterschiedlichen Temperaturen, insbesondere Löttemperaturen, in den Wärmebehandlungszonen 24, 26 ,28, insbesondere Lötzonen, angeordnet sind.

Die Heizelemente sind mittels der Steuer- oder Regeleinheit 30 vorzugsweise individuell steuerbar oder regelbar, insbesondere unabhängig voneinander. Alternativ oder zusätzlich ist es denkbar, dass die Heizelemente mittels der Steuer- oder Regeleinheit 30 zonenweise zusammen steuerbar oder regelbar sind. Die Steuer- oder Regeleinheit 30 ist bevorzugt dazu eingerichtet, die Heizeinheit 18 derart zu steuern oder zu regeln, dass in den Wärmebehandlungszonen 24, 26, 28, insbesondere Lötzonen, unterschiedliche Temperaturen, insbesondere Löttemperaturen, eingestellt sind, insbesondere um zumindest 5 K voneinander abweichende Temperaturen, insbesondere Löttemperaturen.

Die Vakuumanlage 12 weist bevorzugt zumindest eine Sensoreinheit 96 (vgl. Figur 3) zu einem Erfassen von Temperaturkenngrößen auf. Die Sensoreinheit 96 ist vorzugsweise zumindest mit der Steuer- oder Regeleinheit 30 datentechnisch verbunden. Die Sensoreinheit 96 umfasst insbesondere pro Wärmebehandlungszone 24, 26, 28, insbesondere Lötzone, zumindest ein Sensorelement 98, 100, 102 zu einer Erfassung einer Temperatur in der jeweiligen Wärmebehandlungszone 24, 26, 28, insbesondere Lötzone (vgl. Figur 3). Die Sensorelemente 98, 100, 102 sind vorzugsweise in der jeweiligen Wärmebehandlungszone 24, 26, 28, insbesondere Lötzone, angeordnet oder die Sensorelemente 98, 100, 102 erstrecken sich zumindest mit einem Messkopf des jeweiligen Sensorelements 98, 100, 102 in die jeweilige Wärmebehandlungszone 24, 26, 28, insbesondere Lötzone, hinein. Die Sensoreinheit 96 umfasst insbesondere zumindest ein weiteres Sensorelement 104 zu einer Erfassung einer Referenztemperatur in der Vakuumkammer 16 (vgl. Figur 3). Die Sensorelemente 98, 100, 102 und das weitere Sensorelement 104 sind vorzugsweise als Temperatursensoren, insbesondere als Temperaturfühler, ausgebildet. Es ist jedoch auch denkbar, dass die Sensorelemente 98, 100, 102 und das weitere Sensorelement 104 eine andere, einem Fachmann als sinnvoll erscheinende Ausgestaltung aufweisen. Vorzugsweise steuert oder regelt die Steuer- oder Regeleinheit 30 die Heizeinheit 18 in Abhängigkeit von einer durch einen Bediener eingestellten Temperatur je Wärmebehandlungszone 24, 26, 28, insbesondere Lötzone, wobei die Temperaturen in den Wärmebehandlungszonen 24, 26, 28, insbesondere Lötzonen, mittels der Sensoreinheit 96 erfassbar sind und die erfassten Daten durch die Steuer- oder Regeleinheit 30 verarbeitbar sind, um die Heizeinheit 18 entsprechend zu steuern oder zu regeln.

Die Vakuumanlage 12 umfasst bevorzugt zumindest eine, insbesondere thermische, Abschirmeinheit 34 zu einer, insbesondere physischen und/oder thermischen, Unterteilung der Vakuumkammer 16 in die verschiedenen Wärmebehandlungszonen 24, 26, 28, insbesondere Lötzonen, wobei die Abschirmeinheit 34 zumindest in einem Zonenübergangsbereich zwischen zumindest zwei, insbesondere direkt, benachbarten Wärmebehandlungszonen 24, 26, 28, insbesondere Lötzonen, zumindest ein Abschirmelement 36, 38, 40, 42, 44, 46, insbesondere paarweise angeordnete Abschirmelemente 36, 38, 40, 42, 44, 46, aufweist, das/die zu einem Unterteilen der Wärmebehandlungszonen 24, 26, 28, insbesondere Lötzonen, entlang der Längsachse 20, insbesondere Vertikalachse, der Heizeinheit 18 und/oder entlang der Längsachse 48 der Vakuumkammer 16 vorgesehen ist/sind, insbesondere in einem geschlossenen Zustand der Vakuumkammer 16 (vgl. Figur 5). Die Abschirmeinheit 34 ist vorzugsweise dazu vorgesehen, ein Einwirken von einer Wärmebehandlungszone 24, 26, 28, insbesondere Lötzone, zugeordneten Heizelementen der Heizeinheit 18 auf eine weitere Wärmebehandlungszone 24, 26, 28, insbesondere Lötzone, zumindest gering zu halten. Bevorzugt ist die Abschirmeinheit 34 dazu vorgesehen, ein Einwirken von einer Wärmestrahlung von den der Wärmebehandlungszone 24, 26, 28, insbesondere Lötzone, zugeordneten Heizelementen der Heizeinheit 18 auf Werkstücke, die in der weiteren Wärmebehandlungszone 24, 26, 28, insbesondere Lötzone, angeordnet sind, zumindest gering zu halten. Das/die Abschirmelement/e 36, 38, 40, 42, 44, 46 ist/sind vorzugsweise als Abschirmblech/e ausgebildet. Das/die Abschirmelement/e 36, 38, 40, 42, 44, 46 können aus einem Lochblech oder aus einem massiven Blechbauteil gebildet sein. Bevorzugt ist/sind das/die Abschirmelement/e 36, 38, 40, 42, 44, 46 aus einem metallischen Werkstoff ausgebildet und/oder weisen zumindest eine, insbesondere für Infrarotstrahlung, reflektierende Oberfläche, insbesondere Oberflächenbeschichtung, auf. Insbesondere erstreckt/erstrecken sich das/die Abschirmelement/e 36, 38, 40, 42, 44, 46 über weniger als 100 % eines gesamten Innenquerschnitts der Vakuumkammer 16, insbesondere um einen Luftaustausch zwischen Wärmebehandlungszonen 24, 26, 28, insbesondere Lötzonen, zu einem Erzeugen eines Unterdrucks in der gesamten Vakuumkammer 16 zu ermöglichen. Insbesondere weist/weisen das/die Abschirmelement/e 36, 38, 40, 42, 44, 46 zumindest eine Verbindungsschnittstelle 106, 108, 110, 112, 114 zu einer Aufnahme eines Werkstückträgers der Vakuumanlage 12 auf. Der Werkstückträger ist bevorzugt zu einer Aufnahme von in der Vakuumkammer 16 zu bearbeitenden, insbesondere zu erwärmenden, Werkstücken vorgesehen.

Die Figur 6 zeigt einen schematischen Ablauf des Verfahrens 10 zu einem Betrieb der Vakuumanlage 12. Die nachfolgende Beschreibung von einzelnen Verfahrensschritten des Verfahrens 10 basiert insbesondere auf einer bereits geschlossenen Vakuumkammer 16, in der bereits zu bearbeitende Werkstücke angeordnet sind, und auf einer bereits geschlossenen Heizeinheit 18, die die Vakuumkammer 16 umgibt, wobei die nachfolgende Beschreibung nicht als abschließend betrachtet werden soll. Weitere, einem Fachmann als sinnvoll erscheinende Verfahrensschritte sind ebenfalls denkbar.

In zumindest einem Verfahrensschritt 116 wird, insbesondere infolge einer Steuerung oder Regelung durch die Steuer- oder Regeleinheit 30, mittels der Unterdruckeinheit 56 in der Vakuumkammer 16 ein Vakuum erzeugt. Vorzugsweise erfolgt in zumindest einem Verfahrensschritt 118 eine Aktivierung der Heizeinheit 18, insbesondere mittels der Steuer- oder Regeleinheit 30. Bevorzugt werden die Heizelemente der Heizeinheit 18 mittels der Steuer- oder Regeleinheit 30 entsprechend einer für die jeweilige Wärmebehandlungszone 24, 26, 28, insbesondere Lötzone, eingestellten Temperatur mit einer entsprechenden Leistung versorgt. Bevorzugt wird in zumindest einem Verfahrensschritt 14 in die Vakuumkammer 16 der Vakuumanlage 12 mittels der an der Vakuumkammer 16 angeordneten Heizeinheit 18 der Vakuumanlage 12 Wärme, insbesondere mittels Wärmestrahlung, für einen Werkstückbehandlungsprozess, insbesondere Lötprozess, eingebracht. Vorzugsweise werden innerhalb der Vakuumkammer 16, insbesondere entlang der zumindest im Wesentlichen parallel zur Längsachse 20 der Heizeinheit 18 und/oder der Längsachse 48 der Vakuumkammer 16 verlaufenden Richtung 22, die zumindest zwei, insbesondere die zumindest drei, Wärmebehandlungszonen 24, 26, 28, insbesondere Lötzonen, mit unterschiedlichen Temperaturen, insbesondere Löttemperaturen, bereitgestellt.

Die Heizeinheit 18 wird mittels der Steuer- oder Regeleinheit 30 der Vakuumanlage 12 derart gesteuert oder geregelt, dass innerhalb der Vakuumkammer 16, insbesondere entlang der zumindest im Wesentlichen parallel zur Längsachse 20 der Heizeinheit 18 und/oder der Längsachse 48 der Vakuumkammer 16 verlaufenden Richtung 22, in den Wärmebehandlungszonen 24, 26, 28, insbesondere Lötzonen, unterschiedliche Temperaturen, insbesondere Löttemperaturen, erzeugt werden. Vorzugsweise wird die Heizeinheit 18 zu einer Erzeugung von unterschiedlichen Temperaturen, insbesondere Löttemperaturen, in den Wärmebehandlungszonen 24, 26, 28, insbesondere Lötzonen, zonenweise mit unterschiedlichen Leistungen betrieben. Es wird insbesondere entlang einer maximalen Gesamterstreckung 32 der Vakuumkammer 16, insbesondere entlang der zumindest im Wesentlichen parallel zur Längsachse 20 der Heizeinheit 18 und/oder der Längsachse 48 der Vakuumkammer 16 verlaufenden Richtung 22, innerhalb der Vakuumkammer 16 eine inhomogene Temperaturverteilung erzeugt. Bevorzugt wird in einer unteren Wärmebehandlungszone 24, insbesondere Lötzone, der Wärmebehandlungszonen 24, 26, 28, insbesondere Lötzonen, eine höhere Temperatur, insbesondere Löttemperatur, eingestellt als eine Temperatur, insbesondere Löttemperatur, in einer oberen Wärmebehandlungszone 28, insbesondere Lötzone, der Wärmebehandlungszonen 24, 26, 28, insbesondere Lötzonen. Bevorzugt wird in einer mittleren Wärmebehandlungszone 26, insbesondere Lötzone, der Wärmebehandlungszonen 24, 26, 28, insbesondere Lötzonen, die zwischen der oberen Wärmebehandlungszone 28, insbesondere Lötzone, und der unteren Wärmebehandlungszone 24, insbesondere Lötzone, angeordnet ist, eine mittlere Temperatur, insbesondere Löttemperatur, eingestellt, die größer ist als die Temperatur, insbesondere Löttemperatur, in der oberen Wärmebehandlungszone 28, insbesondere Lötzone, und kleiner ist als die Temperatur, insbesondere Löttemperatur, in der unteren Wärmebehandlungszone 24, insbesondere Lötzone. Es ist jedoch auch denkbar, dass in der unteren Wärmebehandlungszone 24, insbesondere Lötzone, eine niedrige Temperatur, insbesondere Löttemperatur, eingestellt wird und in der oberen Wärmebehandlungszone 28, insbesondere Lötzone, eine hohe Temperatur, insbesondere Löttemperatur, eingestellt wird, wobei in der mittleren Wärmebehandlungszone 26, insbesondere Lötzone, eine Temperatur, insbesondere Löttemperatur, eingestellt wird, die höher ist als die Temperatur, insbesondere Löttemperatur, der unteren Wärmebehandlungszone 24, insbesondere Lötzone, und kleiner ist als die Temperatur, insbesondere Löttemperatur, in der oberen Wärmebehandlungszone 28, insbesondere Lötzone. Andere Temperaturen, insbesondere Löttemperaturen, in den einzelnen Wärmebehandlungszonen 24, 26, 28, insbesondere Lötzonen, insbesondere bei mehr als drei Wärmebehandlungszonen 24, 26, 28, insbesondere Lötzonen, sind ebenfalls denkbar, um eine inhomogene Temperaturverteilung innerhalb der Vakuumkammer 16 zu erzeugen. Insbesondere werden die Wärmebehandlungszonen 24, 26, 28, insbesondere Lötzonen, mit einem Temperaturunterschied, insbesondere Löttemperaturunterschied, von mehr als 5 K betrieben.

Bevorzugt wird, insbesondere nach einem vorgebbaren oder voreingestellten Zeitraum, in zumindest einem Verfahrensschritt 120 die Heizeinheit 18 deaktiviert. Insbesondere wird in zumindest einem Verfahrensschritt 122 die Unterdruckeinheit 56 deaktiviert.

Vorzugsweise kann die Vakuumkammer 16 nach einer Deaktivierung der Unterdruckeinheit 56, insbesondere nach einer Abkühlung des Werkzeugaufnahmebereichs, geöffnet werden, um die bearbeiteten, insbesondere gelöteten, Werkstücke zu entnehmen und neue zu bearbeitende Werkstücke in die Vakuumkammer 16 einzubringen.

### Bezugszeichen

- 10: Verfahren
- 12: Vakuumanlage
- 14: Verfahrensschritt
- 16: Vakuumkammer
- 18: Heizeinheit
- 20: Längsachse
- 22: Richtung
- 24: Wärmebehandlungszone
- 26: Wärmebehandlungszone
- 28: Wärmebehandlungszone
- 30: Steuer- oder Regeleinheit
- 32: Gesamterstreckung
- 34: Abschirmeinheit
- 36: Abschirmelement
- 38: Abschirmelement
- 40: Abschirmelement
- 42: Abschirmelement
- 44: Abschirmelement
- 46: Abschirmelement
- 48: Längsachse
- 50: Bodenstandebene
- 52: Gehäuse
- 54: Maschinengestell
- 56: Unterdruckeinheit
- 58: Infrarotstrahler
- 60: Infrarotstrahler
- 62: Infrarotstrahler
- 64: Infrarotstrahler
- 66: Infrarotstrahler
- 68: Infrarotstrahler
- 70: Infrarotstrahler
- 72: Infrarotstrahler
- 74: Infrarotstrahler
- 76: Infrarotstrahler
- 78: Infrarotstrahler
- 80: Infrarotstrahler
- 82: Infrarotstrahler
- 84: Infrarotstrahler
- 86: Infrarotstrahler
- 88: Infrarotstrahler
- 90: Infrarotstrahler
- 92: Infrarotstrahler
- 94: Umfangsrichtung
- 96: Sensoreinheit
- 98: Sensorelement
- 100: Sensorelement
- 102: Sensorelement
- 104: Sensorelement
- 106: Verbindungsschnittstelle
- 108: Verbindungsschnittstelle
- 110: Verbindungsschnittstelle
- 112: Verbindungsschnittstelle
- 114: Verbindungsschnittstelle
- 116: Verfahrensschritt
- 118: Verfahrensschritt
- 120: Verfahrensschritt
- 122: Verfahrensschritt

## Patentansprüche

1. Verfahren zum Betrieb einer Vakuumlötanlage, wobei in zumindest einem Verfahrensschritt (14) in zumindest eine Vakuumkammer (16) der Vakuumlötanlage mittels zumindest einer, insbesondere an der Vakuumkammer (16) angeordneten und vertikal oder horizontal ausgerichteten, als Infrarotheizeinheit ausgebildeten Heizeinheit (18) der Vakuumlötanlage Wärme, insbesondere mittels Wärmestrahlung, für einen Lötprozess eingebracht wird, wobei die Heizeinheit (18) eine Vielzahl an Infrarotstrahlern (58, 60, 62, 64, 66, 68, 70, 72, 74, 76, 78, 80, 82, 84, 86, 88, 90, 92) aufweist, die an der Vakuumkammer (16) angeordnet ist, wobei innerhalb der Vakuumkammer (16), insbesondere entlang einer zumindest im Wesentlichen parallel zu einer Längsachse (20) der als Infrarotheizeinheit ausgebildeten Heizeinheit (18) verlaufenden Richtung (22), zumindest zwei, insbesondere zumindest drei, als Lötzonen ausgebildete Wärmebehandlungszonen (24, 26, 28) mit unterschiedlichen Löttemperaturen bereitgestellt werden, wobei entlang einer maximalen Gesamterstreckung (32) der Vakuumkammer (16), insbesondere entlang der zumindest im Wesentlichen parallel zur Längsachse (20) der als Infrarotheizeinheit ausgebildeten Heizeinheit (18) verlaufenden Richtung (22), innerhalb der Vakuumkammer (16) eine inhomogene Temperaturverteilung erzeugt wird, **dadurch gekennzeichnet, dass** die Heizeinheit (18) die Vakuumkammer (16) in zumindest einem Betriebszustand um mehr als 90° umgibt.

2. Verfahren nach Anspruch 1, **dadurch gekennzeichnet, dass** die als Infrarotheizeinheit ausgebildete Heizeinheit (18) mittels einer Steuer- oder Regeleinheit (30) der Vakuumlötanlage derart gesteuert oder geregelt wird, dass innerhalb der Vakuumkammer (16), insbesondere entlang der zumindest im Wesentlichen parallel zur Längsachse (20) der als Infrarotheizeinheit ausgebildeten Heizeinheit (18) verlaufenden Richtung (22), in den als Lötzonen ausgebildeten Wärmebehandlungszonen (24, 26, 28) unterschiedliche Löttemperaturen erzeugt werden.

3. Verfahren nach Anspruch 1 oder 2, **dadurch gekennzeichnet, dass** die als Infrarotheizeinheit ausgebildete Heizeinheit (18) zu einer Erzeugung von unterschiedlichen Löttemperaturen in den als Lötzonen ausgebildeten Wärmebehandlungszonen (24, 26, 28) zonenweise mit unterschiedlichen Leistungen betrieben wird.

4. Verfahren nach einem der vorhergehenden Ansprüche, **dadurch gekennzeichnet, dass** in einer unteren als Lötzone ausgebildeten Wärmebehandlungszone (24) der als Lötzonen ausgebildeten Wärmebehandlungszonen (24, 26, 28) eine höhere Löttemperatur eingestellt wird als eine Löttemperatur in einer oberen als Lötzone ausgebildeten Wärmebehandlungszone (28) der als Lötzonen ausgebildeten Wärmebehandlungszonen (24, 26, 28).

5. Verfahren nach einem der vorhergehenden Ansprüche, **dadurch gekennzeichnet, dass** die als Lötzonen ausgebildeten Wärmebehandlungszonen (24, 26, 28) mit einem Löttemperaturunterschied von mehr als 5 K betrieben werden.

6. Vakuumlötanlage mit zumindest einer Vakuumkammer (16), mit zumindest einer an der Vakuumkammer (16) angeordneten, insbesondere vertikal oder horizontal ausgerichteten, als Infrarotheizeinheit ausgebildeten Heizeinheit (18), die eine Vielzahl an Infrarotstrahlern (58, 60, 62, 64, 66, 68, 70, 72, 74, 76, 78, 80, 82, 84, 86, 88, 90, 92) aufweist, die an der Vakuumkammer (16) angeordnet ist, und mit zumindest einer Steuer- oder Regeleinheit (30), insbesondere zu einem Durchführen des Verfahrens nach einem der vorhergehenden Ansprüche, wobei die Vakuumkammer (16) in zumindest zwei, insbesondere zumindest drei, als Lötzonen ausgebildete Wärmebehandlungszonen (24, 26, 28) unterteilt ist, die für einen Lötprozess mit unterschiedlichen Löttemperaturen vorgesehen sind, wobei die Steuer- oder Regeleinheit (30) dazu eingerichtet ist, die als Infrarotheizeinheit ausgebildete Heizeinheit (18) derart zu steuern oder zu regeln, dass entlang einer maximalen Gesamterstreckung (32) der Vakuumkammer (16), insbesondere entlang der zumindest im Wesentlichen parallel zur Längsachse (20) der als Infrarotheizeinheit ausgebildeten Heizeinheit (18) verlaufenden Richtung (22), innerhalb der Vakuumkammer (16) eine inhomogene Temperaturverteilung erzeugt wird, **dadurch gekennzeichnet, dass** die Heizeinheit (18) die Vakuumkammer (16) in zumindest einem Betriebszustand um mehr als 90° umgibt.

7. Vakuumlötanlage nach Anspruch 6, **dadurch gekennzeichnet, dass** die als Lötzonen ausgebildeten Wärmebehandlungszonen (24, 26, 28) entlang einer zumindest im Wesentlichen parallel zu einer Längsachse (20), insbesondere Vertikalachse, der als Infrarotheizeinheit ausgebildeten Heizeinheit (18) verlaufenden Richtung (22) aufeinanderfolgend, insbesondere übereinander, angeordnet sind.

8. Vakuumlötanlage nach Anspruch 6 oder 7, **gekennzeichnet durch** zumindest eine, insbesondere thermische, Abschirmeinheit (34) zu einer, insbesondere physischen, Unterteilung der Vakuumkammer (16) in die verschiedenen als Lötzonen ausgebildeten Wärmebehandlungszonen (24, 26, 28), wobei die Abschirmeinheit (34) zumindest in einem Zonenübergangsbereich zwischen zumindest zwei benachbarten als Lötzonen ausgebildeten Wärmebehandlungszonen (24, 26, 28) zumindest ein Abschirmelement (36, 38, 40, 42, 44, 46), insbesondere paarweise angeordnete Abschirmelemente (36, 38, 40, 42, 44, 46), aufweist, das/die zu einem Unterteilen der als Lötzonen ausgebildeten Wärmebehandlungszonen (24, 26, 28) entlang einer Längsachse (20), insbesondere Vertikalachse, der als Infrarotheizeinheit ausgebildeten Heizeinheit (18) vorgesehen ist/sind, insbesondere in einem geschlossenen Zustand der Vakuumkammer (16).

9. Vakuumlötanlage nach einem der Ansprüche 6 bis 8, **dadurch gekennzeichnet, dass** die Steuer- oder Regeleinheit (30) dazu eingerichtet ist, die als Infrarotheizeinheit ausgebildete Heizeinheit (18) derart zu steuern oder zu regeln, dass in den als Lötzonen ausgebildeten Wärmebehandlungszonen (24, 26, 28) unterschiedliche Löttemperaturen eingestellt sind, insbesondere um zumindest 5 K voneinander abweichende Löttemperaturen.

10. Vakuumlötanlage nach einem der Ansprüche 6 bis 9, **dadurch gekennzeichnet, dass** die Heizeinheit (18) relativ zur Vakuumkammer (16) beweglich gelagert, insbesondere schwenkbar gelagert, ist.

## Claims

1. Method for operating a vacuum soldering system,
wherein for a soldering process, in at least one method step (14), heat is introduced, in particular by heat radiation, into at least one vacuum chamber (16) of the vacuum soldering system by means of at least one heating unit (18) of the vacuum soldering system, which is embodied as an infrared heating unit, which is in particular arranged at the vacuum chamber (16) and which is oriented vertically or horizontally,
the heating unit (18) comprising a plurality of infrared radiators (58, 60, 62, 64, 66, 68, 70, 72, 74, 76, 78, 80, 82, 84, 86, 88, 90, 92), which are arranged at the vacuum chamber (16),
wherein within the vacuum chamber (16), in particular along a direction (22) extending at least substantially parallel to a longitudinal axis (20) of the heating unit (18) that is embodied as an infrared heating unit, at least two, in particular at least three, heat treatment zones (24, 26, 28) realized as soldering zones with different soldering temperatures are provided,
wherein an inhomogeneous temperature distribution is generated within the vacuum chamber (16) along a maximum total extent (32) of the vacuum chamber (16), in particular along the direction (22) extending at least substantially parallel to the longitudinal axis (20) of the heating unit (18) that is embodied as an infrared heating unit,
**characterised in that** in at least one operation state the heating unit (18) surrounds the vacuum chamber (16) by more than 90°.

2. Method according to claim 1,
**characterised in that**
the heating unit (18) that is embodied as an infrared heating unit is controlled or regulated by a control or regulation unit (30) of the vacuum soldering system in such a way that within the vacuum chamber (16), in particular along the direction (22) extending at least substantially parallel to the longitudinal axis (20) of the heating unit (18) that is embodied as an infrared heating unit, different soldering temperatures are generated in the heat treatment zones (24, 26, 28) realized as soldering zones.

3. Method according to claim 1 or 2,
**characterised in that** for the purpose of generating different soldering temperatures in the heat treatment zones (24, 26, 28) realized as soldering zones, the heating unit (18) that is embodied as an infrared heating unit is zone-wise operated at different powers.

4. Method according to one of the preceding claims,
**characterised in that** in a lower heat treatment zone (24) realized as a soldering zone of the heat treatment zones (24, 26, 28) realized as soldering zones, a soldering temperature is set that is higher than a soldering temperature in an upper heat treatment zone (28) realized as a soldering zone of the heat treatment zones (24, 26, 28) realized as soldering zones.

5. Method according to one of the preceding claims,
**characterised in that** the heat treatment zones (24, 26, 28) realized as soldering zones are operated with a soldering temperature difference of more than 5 K.

6. Vacuum soldering system with at least one vacuum chamber (16),
with at least one heating unit (18) which is arranged at the vacuum chamber (18), which is in particular oriented vertically or horizontally, which is embodied as an infrared heating unit and which comprises a plurality of infrared radiators (58, 60, 62, 64, 66, 68, 70, 72, 74, 76, 78, 80, 82, 84, 86, 88, 90, 92), which are arranged at the vacuum chamber (16),
and with at least one control or regulation unit (30), in particular for executing the method according to one of the preceding claims,
wherein
the vacuum chamber (16) is divided into at least two, in particular at least three, heat treatment zones (24, 26, 28) realized as soldering zones, which are configured for a soldering process with different soldering temperatures,
wherein the control or regulation unit (30) is configured to control or regulate the heating unit (18) that is embodied as an infrared heating unit in such a way that an inhomogeneous temperature distribution is generated in the vacuum chamber (16) along a maximum total extent (32) of the vacuum chamber (16), in particular along the direction (22) extending at least substantially parallel to the longitudinal axis (20) of the heating unit (18) that is embodied as an infrared heating unit,
**characterised in that** in at least one operation state, the heating unit (18) surrounds the vacuum chamber (16) by more than 90°.

7. Vacuum soldering system according to claim 6,
**characterised in that** the heat treatment zones (24, 26, 28) realized as soldering zones are arranged consecutively, in particular above one another, along a direction (22) extending at least substantially parallel to a longitudinal axis (20), in particular vertical axis, of the heating unit (18) that is embodied as an infrared heating unit.

8. Vacuum soldering system according to claim 6 or 7,
**characterised by** at least one, in particular thermal, shielding unit (34) for an, in particular physical, division of the vacuum chamber (16) into the different heat treatment zones (24, 26, 28) realized as soldering zones,
wherein - at least in a zone transition region between at least two neighbouring heat treatment zones (24, 26, 28) realized as soldering zones - the shielding unit (34) comprises at least one shielding element (36, 38, 40, 42, 44, 46), in particular shielding elements (36, 38, 40, 42, 44, 46) arranged in pairs, which is/are configured for dividing the heat treatment zones (24, 26, 28) realized as soldering zones along a longitudinal axis (20), in particular vertical axis, of the heating unit (18) that is embodied as an infrared heating unit, in particular in a closed state of the vacuum chamber (16).

9. Vacuum soldering system according to one of claims 6 to 8,
**characterised in that** the control or regulation unit (30) is configured to control or regulate the heating unit (18) that is embodied as an infrared heating unit in such a way that in the heat treatment zones (24, 26, 28) realized as soldering zones different soldering temperatures are set, in particular soldering temperatures differing from one another by at least 5 K.

10. Vacuum soldering system according to one of claims 6 to 9,
**characterised in that** the heating unit (18) is supported so as to be movable, in particular pivotable, relative to the vacuum chamber (16).

## Revendications

1. Procédé pour l'opération d'un système de brasage sous vide,
où pour un procès de brasage, dans au moins une étape de procédé (14), de la chaleur est introduite, en particulier par rayonnement thermique, dans au moins une chambre à vide (16) du système de brasage sous vide par le biais d'au moins une unité de chauffage (18) du système de brasage sous vide, qui est en particulier disposé sur la chambre à vide (16) et qui est orientée verticalement ou horizontalement et qui est réalisée comme unité de chauffage à infrarouge,
où l'unité de chauffage (18) comprend une pluralité des émetteurs infrarouges (58, 60, 62, 64, 66, 68, 70, 72, 74, 76, 78, 80, 82, 84, 86, 88, 90, 92) agencés sur la chambre à vide (16),
où au moins deux, en particulier au moins trois, zones de traitement à chaleur (24, 26, 28) réalisées comme zone de brasage et ayant des températures de brasage différentes sont pourvues dans la chambre à vide (16), en particulier le long d'une direction (22) s'étendant au moins sensiblement en parallèle à un axe longitudinal (20) de l'unité de chauffage (18) réalisée comme unité de chauffage à infrarouge,
où une distribution non-homogène de température est générée dans la chambre à vide (16) le long d'une étendue totale maximale (32) de la chambre à vide (16), en particulier le long de la direction (22) s'étendant au moins sensiblement en parallèle à l'axe longitudinal (20) de l'unité de chauffage (18) réalisée comme unité de chauffage à infrarouge,
**caractérisé en ce que**
dans au moins un état de fonctionnement l'unité de chauffage (18) entoure la chambre à vide (16) par plus de 90°.

2. Procédé selon la revendication 1,
**caractérisé en ce que** l'unité de chauffage (18) réalisée comme unité de chauffage à infrarouge, est commandée ou régulée par une unité de commande ou de régulation (30) du système de brasage sous vide d'une telle manière que dans la chambre à vide (16), en particulier le long de la direction (22) s'étendant au moins sensiblement en parallèle à l'axe longitudinal (20) de l'unité de chauffage (18) réalisée comme unité de chauffage à infrarouge, des températures de brasage différentes soient générées dans les zones de traitement à chaleur (24, 26, 28) réalisées comme zones de brasage.

3. Procédé selon la revendication 1 ou 2,
**caractérisé en ce que** pour la génération des températures de brasage différentes dans les zones de traitement à chaleur (24, 26, 28) qui sont réalisées comme zones de brasage, l'unité de chauffage (18) réalisée comme unité de chauffage à infrarouge est opérée par zones avec des puissances différentes.

4. Procédé selon l'une des revendications précédentes,
**caractérisé en ce que** dans une zone de traitement à chaleur inférieure (24) réalisée comme zone de brasage des zones de traitement à chaleur (24, 26, 28) réalisées comme zones de brasage, une température de brasage est réglée qui est supérieure à une température de brasage dans une zone de traitement à chaleur supérieure (28) réalisée comme zone de brasage des zones de traitement à chaleur (24, 26, 28) réalisées comme zones de brasage.

5. Procédé selon l'une des revendications précédentes,
**caractérisé en ce que** les zones de traitement à chaleur (24, 26, 28) réalisées comme zones de brasage sont opérées avec une différence des températures de brasage de plus que 5 K.

6. Système de brasage sous vide avec au moins une chambre à vide (16),
avec au moins une unité de chauffage (18) réalisée comme unité de chauffage à infrarouge, qui est disposée sur la chambre à vide (16), qui est en particulier orientée verticalement ou horizontalement et qui comprend une pluralité des émetteurs infrarouges (58, 60, 62, 64, 66, 68, 70, 72, 74, 76, 78, 80, 82, 84, 86, 88, 90, 92) disposés sur la chambre à vide (16)
et avec au moins une unité de commande et/ou de régulation (30), en particulier pour exécuter le procédé selon l'une quelconque des revendications précédentes,
où
la chambre à vide (16) est divisée en au moins deux, en particulier au moins trois, zones de traitement à chaleur (24, 26, 28) réalisées comme zones de brasage, qui sont prévues pour un procès de brasage avec des températures de brasage différentes,
où l'unité de commande ou de régulation (30) est configurée pour commander ou réguler l'unité de chauffage (18), qui est réalisée comme unité de chauffage à infrarouge, d'une telle manière qu'une distribution de température non-homogène soit générée dans la chambre à vide (16) le long d'une étendue totale maximale (32) de la chambre à vide (16), en particulier le long de la direction (22) s'étendant au moins sensiblement en parallèle à l'axe longitudinal (20) de l'unité de chauffage (18) réalisée comme unité de chauffage à infrarouge,
**caractérisé en ce que** dans au moins un état de fonctionnement l'unité de chauffage (18) entoure la chambre à vide (16) par plus de 90°.

7. Système de brasage sous vide selon la revendication 6,
**caractérisé en ce que** les zones de traitement à chaleur (24, 26, 28) réalisées comme zones de brasage sont agencées successivement, en particulier l'une au-dessus de l'autre, le long d'une direction (22) s'étendant au moins sensiblement en parallèle à un axe longitudinal (20), en particulier axe vertical, de l'unité de chauffage (18) réalisée comme unité de chauffage à infrarouge.

8. Système de brasage sous vide selon la revendication 6 ou 7,
**caractérisé par** au moins une unité de blindage (34), en particulier unité de blindage thermique, pour une division, en particulier division physique, de la chambre à vide (16) dans les zones de traitement à chaleur différentes (24, 26, 28) réalisées comme zones de brasage,
où - au moins dans une région de transition de zones entre au moins deux zones de traitement à chaleur voisinées (24, 26, 28) qui sont réalisées comme zones de brasage - l'unité de blindage (34) comprend au moins un élément de blindage (36, 38, 40, 42, 44, 46), en particulier des éléments de blindage (36, 38, 40, 42, 44, 46) agencés en paires, qui est prévu/sont prévus pour diviser les zones de traitement à chaleur (24, 26, 28) réalisées comme zones de brasage le long d'un axe longitudinal (20), en particulier axe vertical, de l'unité de chauffage (18) réalisée comme unité de chauffage à infrarouge, en particulier dans un état fermé de la chambre à vide (16).

9. Système de brasage sous vide selon l'une des revendications 6 à 8,
**caractérisé en ce que** l'unité de commande ou de régulation (30) est configurée pour commander ou réguler l'unité de chauffage (18) réalisée comme unité de chauffage à infrarouge d'une telle manière que des températures de brasage différentes, en particulier des températures de brasage qui diffèrent l'une de l'autre par au moins 5 K, soient réglées dans les zones de traitement à chaleur (24, 26, 28) réalisées comme zones de brasage.

10. Système de brasage sous vide selon l'une des revendications 6 à 9,
**caractérisé en ce que** l'unité de chauffage (18) est supportée de façon mobile, en particulier de façon pivotable, par rapport à la chambre à vide (16).
